# EUROPEAN PATENT APPLICATION

(11) **EP 4 595 803 A1**
(43) Date of publication of application: **06.08.2025**
(21) Application number: 23885577.9
(22) Date of filing: 24.10.2023
(51) Int. Cl.: A44C 27/00, A44C 3/00, B21D 39/02, B26D 3/10, B26D 7/18, B26F 1/40, B26F 1/44, B41J 11/66, B41J 13/02, B65H 9/00, B65H 29/58

(54) **CAN PRODUCT MANUFACTURING DEVICE, CAN PRODUCT MANUFACTURING METHOD, AND CAN PRODUCT MANUFACTURING PROGRAM**

(30) Priority: 04.11.2022 JP 2022177203
(71) Applicant: BROTHER KOGYO KABUSHIKI KAISHA, Nagoya-shi, Aichi 467-8561 (JP)
(72) Inventor: KOGA Yuji, Nagoya-shi, Aichi 467-8562 (JP); TAKEUCHI Kenji, Nagoya-shi, Aichi 467-8562 (JP); TSUJISHITA Yoji, Nagoya-shi, Aichi 467-8562 (JP)
(74) Representative: Prüfer & Partner mbB Patentanwälte · Rechtsanwälte
(86) International application number: PCT/JP2023/038284
(87) International publication number: WO 2024/095817

(57) **Abstract**

Provided are a button product manufacturing device, a button product manufacturing method, and a button product manufacturing program with which it is possible to manufacture button products with high precision. This button product manufacturing device connects an obverse member and a reverse member to manufacture a button product, the button product manufacturing device comprising a printing unit that prints onto a medium for printing, a die unit having a lower die that supports the obverse member and an upper die that separates the obverse member from the lower die, and a transport unit that transports the medium for printing above the obverse member in a transport direction oriented from the printing unit toward the die unit.

## Description

### TECHNICAL FIELD

The present invention relates to a button product manufacturing device, a button product manufacturing method, and a button product manufacturing program.

### BACKGROUND ART

In the related art, a device for manufacturing a button product such as a button badge to which a predetermined image is applied is known, and Patent Literature 1 discloses a button product manufacturing device that manufactures a button badge by caulking a front lid to a back lid.

### CITATION LIST

### PATENT LITERATURE

### Patent Literature 1: JP2019-136210A

### SUMMARY OF INVENTION

### TECHNICAL PROBLEM

However, in the related art described above, a user himself or herself places a transparent film on a film placement surface of a lower die, the transparent film being used for caulking a front lid together with a back lid supported by a lower die. Therefore, the user himself or herself can enjoy the manufacturing of the button badge by participating in the manufacturing of the button badge, but the positioning accuracy of the transparent film may decrease. As a result, there is a problem that it is difficult to manufacture a button product with high accuracy.

Therefore, an object of the present invention is to provide a button product manufacturing device, a button product manufacturing method, and a button product manufacturing program capable of manufacturing a button product with high accuracy.

### SOLUTION TO PROBLEM

A button product manufacturing device according to the present invention is a button product manufacturing device for manufacturing a button product by connecting a front member and a back member, the button product manufacturing device includes: a printing unit configured to perform printing on a printed medium; a die set including a lower die configured to support the front member and an upper die configured to separate the front member from the lower die; and a conveying unit configured to convey the printed medium above the front member in a conveying direction from the printing unit toward the die set.

According to the present invention, the printed medium is conveyed by the conveying unit above the front member supported by the lower die. Accordingly, the conveying accuracy of the printed medium with respect to the front member is improved. Therefore, the button product can be manufactured with high accuracy. In addition, a labor of a user is not required for manufacturing the button product.

### ADVANTAGEOUS EFFECTS OF INVENTION

According to the present invention, it is possible to provide a button product manufacturing device, a button product manufacturing method, and a button product manufacturing program capable of manufacturing a button product with high accuracy.

### BRIEF DESCRIPTION OF DRAWINGS

[FIG. 1] FIG. 1 is a perspective view illustrating a button product manufacturing device according to an embodiment.
[FIG. 2] FIG. 2 is a plan view illustrating the button product manufacturing device in FIG. 1.
[FIG. 3] FIG. 3 is a block diagram illustrating a configuration of a control system of the button product manufacturing device in FIG. 1.
[FIG. 4] FIG. 4 is a perspective view illustrating a configuration of a front member feed unit.
[FIG. 5] FIG. 5 is a perspective view illustrating a configuration of a back member feed unit.
[FIG. 6A] FIG. 6A is a plan view illustrating a print medium.
[FIG. 6B] FIG. 6B is a plan view illustrating a white film.
[FIG. 7] FIG. 7 is a perspective view illustrating a configuration of a conveying unit.
[FIG. 8] FIG. 8 is a side view illustrating the conveying unit in FIG. 7.
[FIG. 9] FIG. 9 is a plan view illustrating a lower plate and an upper plate that are provided on a lower die.
[FIG. 10A] FIG. 10A is a perspective view illustrating a pressing unit.
[FIG. 10B] FIG. 10B is a perspective view of the pressing unit viewed from a direction different from that of FIG. 10A.
[FIG. 11] FIG. 11 is a diagram illustrating a standby position of a pressing head of the pressing unit.
[FIG. 12] FIG. 12 is a diagram illustrating a pressing position of the pressing head of the pressing unit.
[FIG. 13A] FIG. 13A is a perspective view of a die set.
[FIG. 13B] FIG. 13B is a perspective view of the die set viewed from a direction different from that of FIG. 13A.
[FIG. 14A] FIG. 14A is a perspective view illustrating a front member and a back member.
[FIG. 14B] FIG. 14B is a cross-sectional view of a button product manufactured by connecting the front member and the back member in FIG. 14A.
[FIG. 15A] FIG. 15A is a cross-sectional view of an upper die and two lower dies for illustrating a caulking process of the front member and the back member.
[FIG. 15B] FIG. 15B is a cross-sectional view of the upper die and the two lower dies for illustrating the caulking process of the front member and the back member.
[FIG. 16A] FIG. 16A is a cross-sectional view of the upper die and the two lower dies for illustrating the caulking process of the front member and the back member.
[FIG. 16B] FIG. 16B is a cross-sectional view of the upper die and the two lower dies for illustrating the caulking process of the front member and the back member.
[FIG. 17] FIG. 17 is a perspective view of a take-out unit.
[FIG. 18] FIG. 18 is a diagram illustrating the taking-out of the button product by the take-out unit in FIG. 17.
[FIG. 19] FIG. 19 is a flowchart illustrating a flow of a process by the button product manufacturing device.
[FIG. 20A] FIG. 20A is a diagram illustrating a first modification of a cutting configuration of a coupling portion of a printed medium.
[FIG. 20B] FIG. 20B is a diagram illustrating a second modification of the cutting configuration of the coupling portion of the printed medium.
[FIG. 21A] FIG. 21A is a diagram illustrating a third modification of the cutting configuration of the coupling portion of the printed medium.
[FIG. 21B] FIG. 21B is a diagram illustrating a fourth modification of the cutting configuration of the coupling portion of the printed medium.
[FIG. 22] FIG. 22 is a diagram illustrating a fifth modification of the cutting configuration of the coupling portion of the printed medium.
[FIG. 23] FIG. 23 is a diagram illustrating a modification of a shape of a connected portion of the printed medium.
[FIG. 24] FIG. 24 is a diagram illustrating a first modification of a relation between a conveying direction of the printed medium and movement directions of the two lower dies.
[FIG. 25] FIG. 25 is a diagram illustrating a second modification of the relation between the conveying direction of the printed medium and the movement directions of the two lower dies.
[FIG. 26] FIG. 26 is a diagram illustrating a relation between the conveying direction of the printed medium and movement directions of the front member and the back member.

### DESCRIPTION OF EMBODIMENTS

Hereinafter, a button product manufacturing device according to an embodiment of the present invention will be described with reference to the drawings. The button product manufacturing device to be described below is merely an embodiment of the present invention. Accordingly, the present invention is not limited to the following embodiment, and can be added, deleted, or modified without departing from the scope of the present invention.

### (Overall Configuration)

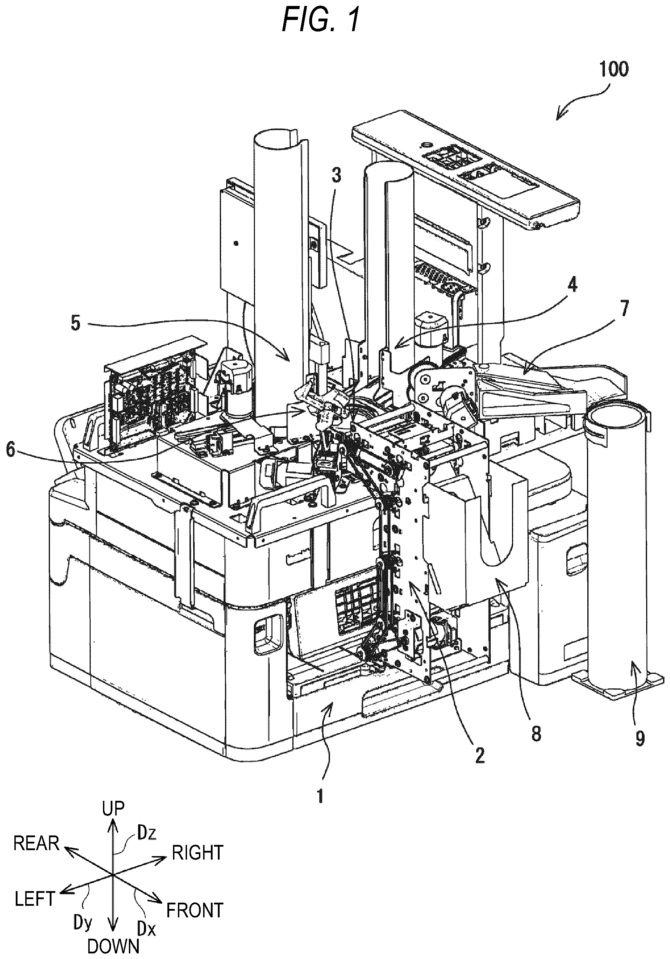

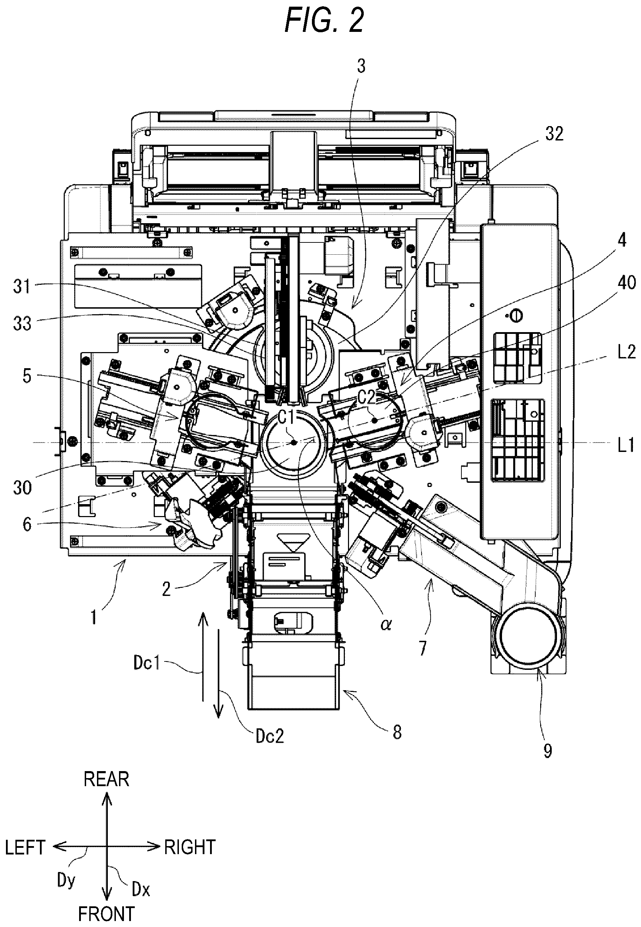

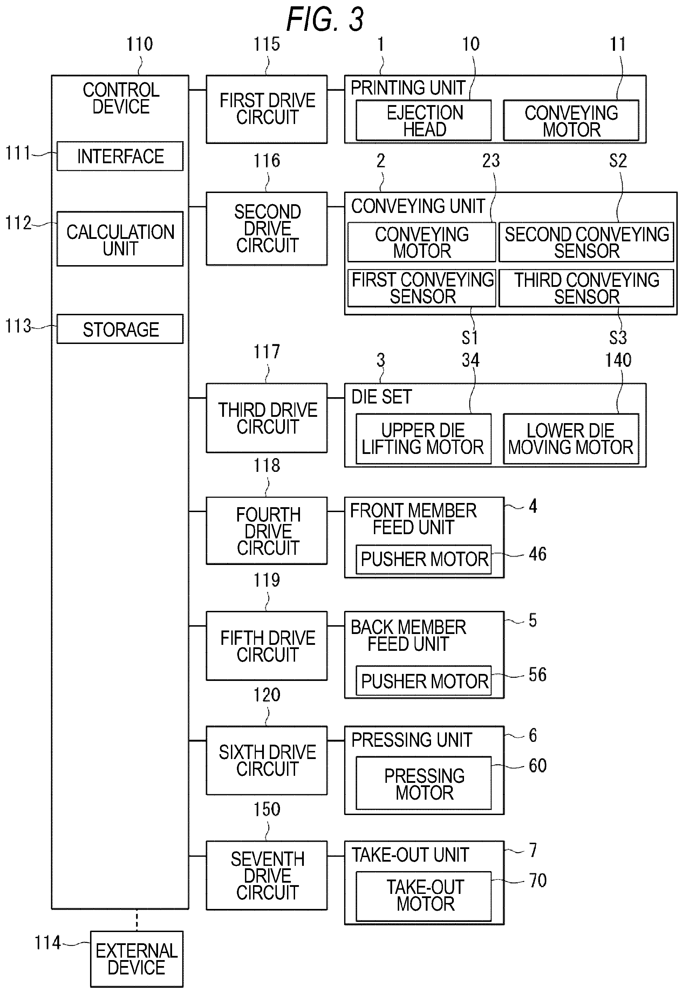

FIG. 1 is a perspective view illustrating a button product manufacturing device 100 according to an embodiment of the present invention. FIG. 2 is a plan view illustrating the button product manufacturing device 100 in FIG. 1. FIG. 3 is a block diagram illustrating a configuration of a control system of the button product manufacturing device 100 in FIG. 1. The button product manufacturing device 100 is a device that manufactures a button product by connecting a front member and a back member, for example, by caulking the front member and the back member. The button product manufacturing device 100 includes a printing unit 1, a conveying unit 2, a die set 3, a front member feed unit 4, a back member feed unit 5, a pressing unit 6, a take-out unit 7, a collection box 8, and a button product container 9, as illustrated in FIGS. 1 and 2. In FIGS. 1 and 2, directions orthogonal to one another are referred to as a first direction Dx, a second direction Dy, and a third direction Dz. In the present embodiment, for example, the first direction Dx is a front-rear direction of the button product manufacturing device 100, the second direction Dy is a left-right direction of the button product manufacturing device 100, and the third direction Dz is an up-down direction. In this case, a front surface side of the printing unit 1 is referred to as a front side, a back surface side is referred to as a rear side, and left and right sides when viewed from a front surface are referred to as a left side and a right side. In the following description, Dx is referred to as the front-rear direction, Dy is referred to as the left-right direction, and Dz is referred to as the up-down direction.

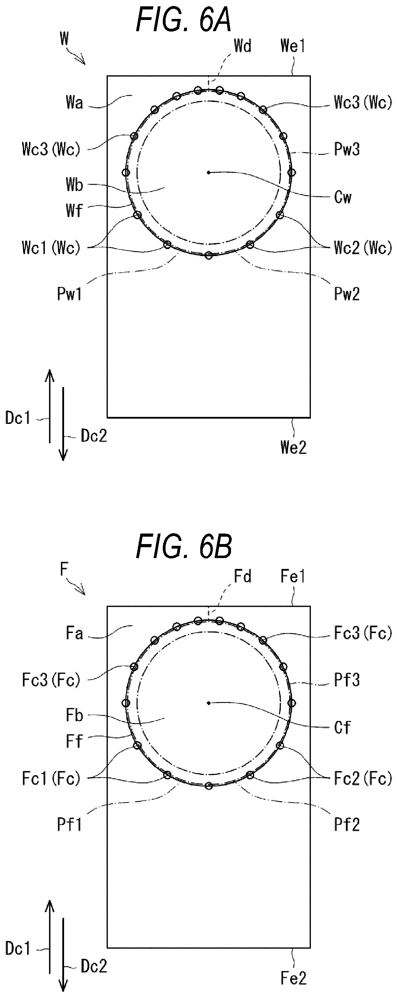

The printing unit 1 is disposed below the die set 3, the front member feed unit 4, the back member feed unit 5, the pressing unit 6, and the take-out unit 7. The printing unit 1 is an inkjet printer configured to print an image on a printed medium W (FIG. 6A to be described later) such as a transparent film. The printing unit 1 is configured to perform printing on the printed medium W. Specifically, the printing unit 1 includes an ejection head 10, and printing is performed by ejecting ink droplets onto the printed medium W by the ejection head 10. The printing unit 1 includes a conveying motor 11 configured to drive a conveying roller. The ejection head 10 may be a serial head type or a line head type.

The printing unit 1 includes a sheet holder (not illustrated) configured to hold a plurality of sheets of printed media W and a plurality of sheets of white films F (FIG. 6B to be described later). The printed media W and the white films F are held in the sheet holder as a bundle in which the printed media W and the white films F are alternately stacked. The white film F is supplied to the conveying unit 2 without being printed by the printing unit 1, and the printed medium W is supplied to the conveying unit 2 after a predetermined image is formed by the ejection head 10 of the printing unit 1. The predetermined image is an inverted image that becomes a normal image when a user views the image from a surface opposite to a surface on which the image is printed among the surfaces of the printed medium W. In the present embodiment, an example in which the printing unit 1 is an inkjet printer has been described, but the printing unit 1 is not limited thereto, and may be another printer such as a laser printer or a thermal printer.

The button product manufacturing device 100 further includes a control device 110, a first drive circuit 115, a second drive circuit 116, a third drive circuit 117, a fourth drive circuit 118, a fifth drive circuit 119, a sixth drive circuit 120, and a seventh drive circuit 150, as illustrated in FIG. 3. The control device 100 includes an interface 111, a calculation unit 112, and a storage unit 113. The interface 111 is configured to receive various data such as image data from an external device 114 such as a computer, a camera, a communication network, a recording medium, a display, and a printer. The control device 110 may be implemented by a single device, or may have a configuration in which a plurality of devices are arranged in a distributed manner and cooperate with each other to perform the operation of the button product manufacturing device 100.

The storage unit 113 is a memory accessible from the calculation unit 112, and includes a RAM and a ROM. The RAM temporarily stores various data including data received from the external device 114 such as image data, data converted by the calculation unit 112, and the like. The ROM stores a button product manufacturing program for performing various processes, predetermined data, and the like. The button product manufacturing program may be stored in an external storage medium different from the storage unit 113 and accessible from the calculation unit 112, such as a CD-ROM.

The calculation unit 112 includes at least one circuit, for example, a processor such as a CPU, and an integrated circuit such as an ASIC. The calculation unit 112 is configured to control each unit by executing the button product manufacturing program. In the present embodiment, the calculation unit 112 corresponds to a computer, a feed control unit, a print control unit, a conveying control unit, an upper die control unit, and a connection control unit.

The control device 110 is configured to output a control signal to the first drive circuit 115. The first drive circuit 115 is configured to generate a drive signal based on the control signal and to output the drive signal to the ejection head 10 of the printing unit 1. The ejection head 10 is driven in response to the drive signal, which causes ink droplets to be ejected from nozzles. In detail, the first drive circuit 115 is configured to cause the ejection head 10 to eject ink droplets onto the printed medium W while moving the ejection head 10 in a predetermined movement direction based on the image data acquired from the external device 114. The first drive circuit 115 drives the conveying motor 11 to convey the printed medium W in a predetermined conveying direction. In this way, the first drive circuit 115 alternately repeats the printing pass and the conveying operation, so that an image based on the image data is printed on the printed medium W.

The control device 110 is configured to output a control signal to the second drive circuit 116. The second drive circuit 116 is configured to generate a drive signal based on the control signal and to control the operation of the conveying motor 23 provided in the conveying unit 2. In this case, the second drive circuit 116 is configured to control the operation of the conveying motor 23, based on detection results of a first conveying sensor S1, a second conveying sensor S2, and a third conveying sensor S3 provided in the conveying unit 2.

The control device 110 is configured to output a control signal to the third drive circuit 117. The third drive circuit 117 is configured to generate a drive signal based on the control signal and to control each operation of an upper die lifting motor 34 and a lower die moving motor 140 included in the die set 3. The control device 110 is configured to output a control signal to the fourth drive circuit 118. The fourth drive circuit 118 is configured to generate a drive signal based on the control signal and to control an operation of a pusher motor 46 provided in the front member feed unit 4. Further, the control device 110 is configured to output a control signal to the fifth drive circuit 119. The fifth drive circuit 119 is configured to generate a drive signal based on the control signal and to control an operation of a pusher motor 56 provided in the back member feed unit 5. The control device 110 is configured to output a control signal to the sixth drive circuit 120. The sixth drive circuit 120 is configured to generate a drive signal based on the control signal and to control an operation of a pressing motor 60 provided in the pressing unit 6. The control device 110 is configured to output a control signal to the seventh drive circuit 150. The seventh drive circuit 150 is configured to generate a drive signal based on the control signal and to control an operation of a take-out motor 70 provided in the take-out unit 7.

The control device 110 is configured to perform a process of causing an upper die 33 to separate a front member SE and a connected portion Wb of the printed medium W from a lower die 30, and a process of connecting, to a back member BE, the front member SE and the connected portion Wb of the printed medium W that are separated by the upper die 33.

### (Front Member Feed Unit)

Hereinafter, configurations and functions of the conveying unit 2, the die set 3, the front member feed unit 4, the back member feed unit 5, the pressing unit 6, and the take-out unit 7 will be described in detail.

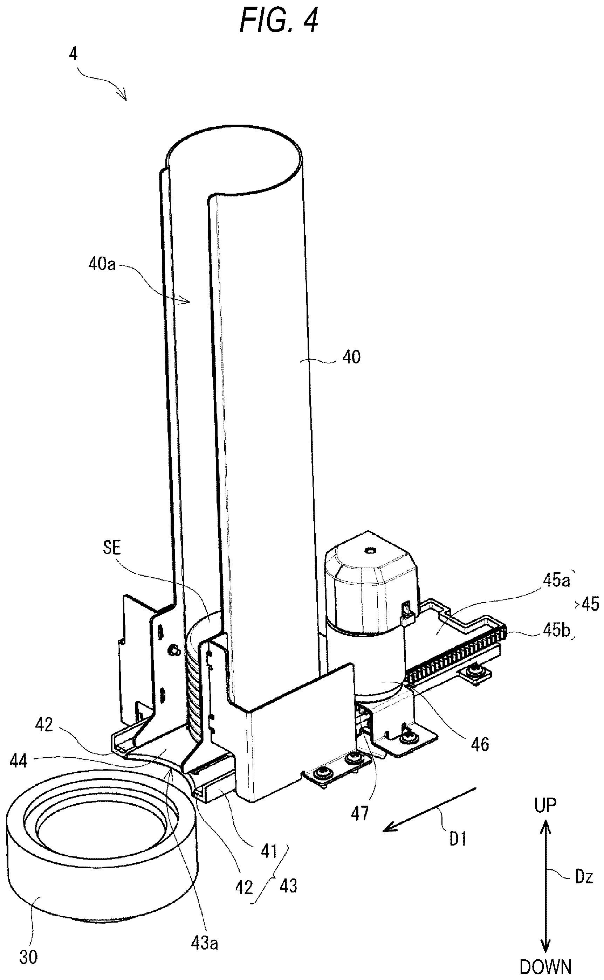

First, the front member feed unit 4 and the back member feed unit 5 will be described. FIG. 4 is a perspective view illustrating a configuration of the front member feed unit 4. The front member feed unit 4 is configured to feed the front members SE to the lower die 30 provided in the die set 3. Each of the front members SE is formed of a magnetic material such as a tin-plated steel plate.

The front member feed unit 4 is disposed above the printing unit 1 and to the right of the die set 3. The front member feed unit 4 includes a front member stocker 40, a front member slope 43, a pusher 45, and the pusher motor 46, as illustrated in FIG. 4. The front member stocker 40 is configured to accommodate a plurality of front members SE each having, for example, a circular shape in plan view while the front members SE are stacked in the up-down direction Dz. The front member stocker 40 is formed in a cylindrical shape. The front member stocker 40 is erected such that an axial center thereof is oriented in the up-down direction. A slit 40a extending in the up-down direction is formed in the front member stocker 40 at a portion close to the lower die 30. The slit 40a has a width dimension smaller than a diameter dimension of the front member SE. The slit 40a is formed in a portion from an upper end to a lower end of the front member stocker 40. The user can visually recognize the front members SE accommodated in the front member stocker 40 through the slit 40a of the front member stocker 40. That is, the user can grasp the remaining number of the front members SE. When the remaining number is small, the user can newly replenish the front member SE from the upper end of the front member stocker 40. When a straight line orthogonal to a conveying direction Dc1 in FIG. 2 is defined as a first straight line L1 and a straight line connecting a center C1 of the lower die 30 and a center C2 of the front member stocker 40 in plan view is defined as a second straight line L2, an acute angle α formed by the first straight line L1 and the second straight line L2 is, for example, more than 0 degrees and 30 degrees or less.

A space having a dimension equal to or slightly larger than a thickness dimension of one front member SE is provided between the lower end of the front member stocker 40 and an upper surface of the front member slope 43. The pusher 45 is configured to push out the front members SE on the front member slope 43 toward the lower die 30. The pusher 45 is disposed on a side opposite to the lower die 30 with respect to the front member stocker 40. That is, the front member stocker 40 is disposed between the lower die 30 and the pusher 45. The pusher 45 includes, for example, a plate-shaped pusher main body 45a and a rack gear 45b connected to the pusher main body 45a and extending in a predetermined feed direction D1. The rack gear 45b meshes with a pinion gear 47 connected to a rotary shaft of the pusher motor 46. The pusher motor 46 is rotationally driven, so that the rack gear 45b moves in the feed direction D1 and an opposite direction thereof, and the pusher main body 45a moves on the front member slope 43 in the feed direction D1 and the opposite direction along with the movement. In this case, when the pusher main body 45a moves in the feed direction D1, a leading end of the pusher main body 45a passes below the front member stocker 40 and reaches the vicinity of the lower die 30. Accordingly, one front member SE supplied from the front member stocker 40 onto the front member slope 43 is pushed out by the pusher main body 45a and sent out in the feed direction D1 toward the lower die 30. Accordingly, the lower die 30 supports the front members SE. In this case, when the pusher main body 45a moves in an opposite direction to the feed direction D1 and retracts, the leading end of the pusher main body 45a retreats from below the front member stocker 40 to the outside. Accordingly, one front member SE is supplied from the front member stocker 40 onto the front member slope 43.

The front member slope 43 is configured to guide the front member SE pushed out by the pusher 45 toward the lower die 30 in the feed direction D1. The front member slope 43 is disposed below the front member stocker 40, and extends below the front member stocker 40 from a predetermined position adjacent to the lower die 3. The front member slope 43 includes a pair of support portions 42 and a slope main body 41 whose cross section is formed in, for example, a concave shape. The pair of support portions 42 are provided on both ends of a bottom portion of the slope main body 41 in a direction (that is, a width direction) orthogonal to the feed direction D1. Accordingly, an escape groove 44 that is a portion lower than a height of the support portion 42 is formed on an inner bottom surface of the slope main body 41. When the front member SE is supplied from the front member stocker 40 toward the front member slope 43, the front member SE is supported by the pair of support portions 42 of the front member slope 43.

The front member slope 43 has a notch 43a at a downstream end of the front member SE in the feed direction D1. The notch 43a has an arc shape cut out in a convex shape in the opposite direction to the feed direction D1.

By providing the notch 43a in the front member slope 43, an upstream end of the front member SE (that is, an end on a side opposite to a side where the lower die 30 is present) is less likely to be caught by the front member slope 43 when the front member SE is supplied from a downstream end of the front member slope 43 to the lower die 30. Therefore, the front member SE can be supplied to the lower die 30 with high accuracy.

### (Back Member Feed Unit)

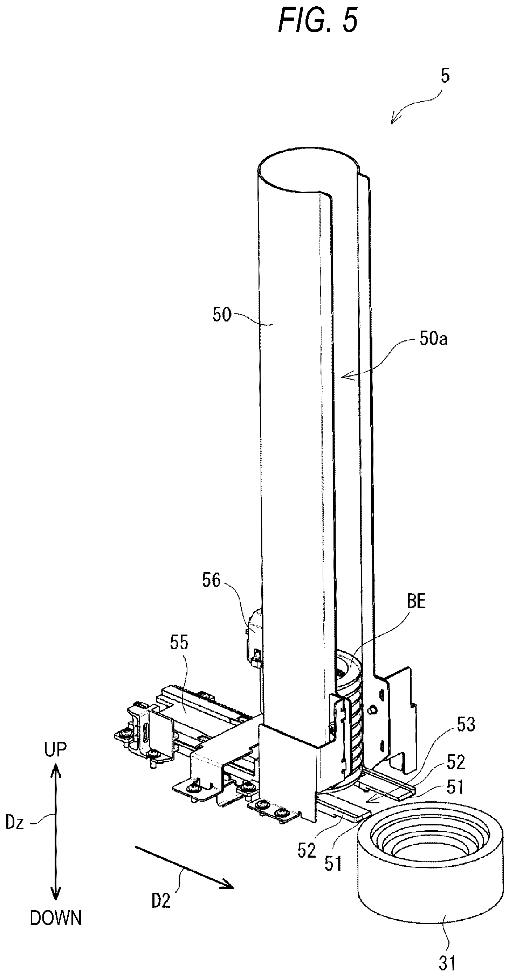

Next, the back member feed unit 5 will be described. FIG. 5 is a perspective view illustrating a configuration of the back member feed unit 5. The back member feed unit 5 supplies the back member BE to a lower die 31 different from the lower die 30. The back member BE is formed of a magnetic material such as a tin-plated steel plate. A method of feeding the back member BE by the back member feed unit 5 is basically the same as a method of feeding the front member SE by the front member feed unit 4.

The back member feed unit 5 is disposed above the printing unit 1 and to the left of the die set 3. The back member feed unit 5 includes a back member stocker 50, a back member slope 53, a pusher 55, and the pusher motor 56, as illustrated in FIG. 5. The back member stocker 50 accommodates a plurality of back members BE each having, for example, a circular shape in plan view while the back members BE are stacked in the up-down direction Dz. The back member stocker 50 is formed in a cylindrical shape. The back member stocker 50 is erected such that an axial center thereof is oriented in the up-down direction. A slit 50a extending in the up-down direction is formed in the back member stocker 50 at a portion close to the lower die 31. The slit 50a has a width dimension smaller than a diameter dimension of the back member BE, and is formed at a portion from an upper end to a lower end of the back member stocker 50. The user can visually recognize the back members BE accommodated in the back member stocker 50 through the slit 50a of the back member stocker 50. That is, the user can grasp the remaining number of back members BE. When the remaining number is small, the user can newly replenish the back member BE from the upper end of the back member stocker 50.

A space having a dimension equal to or slightly larger than a thickness dimension of one back member BE is provided between the lower end of the back member stocker 50 and an upper surface of the back member slope 53. The pusher 55 is configured to push out the back members BE on the back member slope 53 toward the lower die 31. The pusher 55 is disposed on a side opposite to the lower die 31 with respect to the back member stocker 50. That is, the back member stocker 50 is disposed between the lower die 31 and the pusher 55. The pusher motor 56 is rotationally driven, so that the pusher 55 moves on the back member slope 53 in a predetermined feed direction D2 and an opposite direction thereof via a rack gear and a pinion gear (not illustrated) similar to those of the front member feed unit 4. In this case, in a case where the pusher 55 moves in the feed direction D2, a leading end of the pusher 55 passes below the back member stocker 50 and reaches the vicinity of the lower die 31. Accordingly, one back member BE supplied from the back member stocker 50 onto the back member slope 53 is pushed out by the pusher 55 and sent out in the feed direction D2 toward the lower die 31. On the other hand, in a case where the pusher 55 moves in an opposite direction to the feed direction D2 and retracts, the leading end of the pusher 55 retracts from below the back member stocker 50 to the outside. Accordingly, one back member BE is supplied from the back member stocker 50 onto the back member slope 53.

The back member slope 53 is configured to guide, toward the lower die 31 in the feed direction D2, the back member BE pushed out by the pusher 55. The back member slope 53 is disposed below the back member stocker 50, and extends below the back member stocker 50 from a predetermined position adjacent to the lower die 3. The back member slope 53 includes a pair of slope main bodies 51 and a pair of guide walls 52 on a downstream side in the feed direction D2. The slope main bodies 51 are disposed apart from each other in a direction, which is the width direction, orthogonal to the feed direction D2. Accordingly, a space is provided between one slope main body 51 and the other slope main body 51. Further, one guide wall 52 is erected at an outer end of one slope main body 51, which is an outer end in a direction orthogonal to the feed direction D2, and the other guide wall 52 is erected at an outer end of the other slope main body 51. Both ends of the back member BE, supplied from the back member stocker 50, in the direction orthogonal to the feed direction D2 are supported from below by the pair of slope main bodies 51. Accordingly, when, for example, a pin or the like is provided in the back member BE, it is possible to avoid interference of the pin or the like with the slope main bodies 51. Although the space is provided between the one slope main body 51 and the other slope main body 51 as described above, the configuration of the back member slope 53 is not limited thereto. In the back member slope 53, as illustrated in FIG. 4, an escape groove formed by the slope main body and A pair of support portions may also be provided.

### (Printed Medium and White Film)

Next, the printed medium W and the white film F conveyed from the printing unit 1 by the conveying unit 2 will be described. FIG. 6A is a plan view illustrating the printed medium W, and FIG. 6B is a plan view illustrating the white film F.

The printed medium W is, for example, a transparent sheet. As illustrated in FIG. 6A, the printed medium W has a rectangular shape. The printed medium W includes an edge portion We1 on a downstream side in the conveying direction Dc1, and an edge portion We2 on an upstream side in the conveying direction Dc1 when being conveyed toward the die set 3 by the conveying unit 2. The printed medium W includes a sheet-shaped connected portion Wb connected to the front member SE and the back member BE by the die set 3, a sheet-shaped remaining portion Wa different from the connected portion Wb, and a plurality of coupling portions Wc coupling the connected portion Wb and the remaining portion Wa. The connected portion Wb has, for example, a circular shape in plan view, and is unevenly distributed toward the edge portion We1 in the printed medium W. The printed medium W after a second cutting process to be described later, that is, the connected portion Wb has the same size as the connected portion Fb of the white film F or is larger than the connected portion Fb of the white film. The remaining portion Wa is disposed to surround the connected portion Wb. The printed medium W further includes a linear weak portion Wd extending from the edge portion We1 to the connected portion Wb. In a case where the remaining portion Wa of the printed medium W is separated from the connected portion Wb, the remaining portion Wa is conveyed by the conveying unit 2 in a conveying direction Dc2 that is an opposite direction to the conveying direction Dc1. In this case, in the conveying direction Dc2, the edge portion We2 corresponds to an edge portion on the downstream side, and the edge portion We1 corresponds to an edge portion on the upstream side. Details thereof will be described later.

The coupling portion Wc and the linear weak portion Wd form a weak portion having lower strength than the connected portion Wb and the remaining portion Wa. Specifically, there has been illustrated that the coupling portion Wc and the linear weak portion Wd may be recesses or the like having a thickness smaller than those of the connected portion Wb and the remaining portion Wa. As another example, there has been illustrated that the coupling portion Wc and the linear weak portion Wd have the same thickness as the connected portion Wb and the remaining portion Wa, but the coupling portion Wc and the linear weak portion Wd are partially cut to form perforations.

The printed medium W includes the plurality of coupling portions Wc and a cutting portion Wf between adjacent coupling portions Wc, at a boundary between the connected portion Wb and the remaining portion Wa. Accordingly, the connected portion Wb and the remaining portion Wa are cut and not coupled between the adjacent coupling portions Wc. Here, the connected portion Wb includes a first position Pw1 where the connected portion Wb is pressed toward the lower die 30 by a first pressing portion 66e (to be described later) provided in the pressing unit 6, and a second position Pw2 where the connected portion Wb is pressed toward the lower die 30 by a second pressing portion 66f (to be described later). The coupling portion Wc includes a first coupling portion Wc1, a second coupling portion Wc2, and a third coupling portion Wc3. The first coupling portion Wc1 couples the first position Pw1 and the remaining portion Wa. The second coupling portion Wc2 couples the second position Pw2 and the remaining portion Wa. The third coupling portion Wc3 couples the remaining portion Wa with the third position Pw3 of the connected portion Wb excluding the first position Pw1 and the second position Pw2.

The total number of the first coupling portions Wc1 and the second coupling portions Wc2 is smaller than the number of the third coupling portions Wc3. In this case, the two coupling portions Wc present on a straight line orthogonal to the conveying direction Dc1 and passing through a center Cw of the connected portion Wb may be included in the first coupling portion Wc1 and the second coupling portion Wc2, or may be included in the third coupling portion Wc3.

A configuration of the white film F is basically the same as a configuration of the printed medium W. As illustrated in FIG. 6B, the white film F has the same size as the printed medium W and has a rectangular shape. The white film F includes an edge portion Fe1 on the downstream side in the conveying direction Dc1 and an edge portion Fe2 on the upstream side in the conveying direction Dc1 when being conveyed toward the die set 3 by the conveying unit 2. The white film F includes a sheet-shaped connected portion Fb connected to the front member SE and the back member BE by the die set 3, a sheet-shaped remaining portion Fa different from the connected portion Fb, and a plurality of coupling portions Fc coupling the connected portion Fb and the remaining portion Fa. The connected portion Fb has, for example, a circular shape in plan view, and is unevenly distributed toward the edge portion Fe1 in the printed medium W. The remaining portion Fa is disposed to surround the connected portion Fb. The printed medium W further includes a linear weak portion Fd extending from the edge portion Fe1 to the connected portion Fb. In a case where the remaining portion Fa of the printed medium W is separated from the connected portion Fb, the remaining portion Fa is conveyed by the conveying unit 2 in the conveying direction Dc2 that is an opposite direction to the conveying direction Dc1. In this case, in the conveying direction Dc2, the edge portion Fe2 corresponds to an edge portion on the downstream side, and the edge portion Fe1 corresponds to an edge portion on the upstream side.

The coupling portion Fc and the linear weak portion Fd form a weak portion having lower strength than the connected portion Fb and the remaining portion Fa. Specifically, there has been illustrated that the coupling portion Fc and the linear weak portion Fd may be recesses or the like having a thickness smaller than those of the connected portion Fb and the remaining portion Fa. Further, as another example, there has been illustrated that the coupling portion Fc and the linear weak portion Fd have the same thickness as the connected portion Fb and the remaining portion Fa, but the coupling portion Fc and the linear weak portion Fd are partially cut to form perforations.

The printed medium W includes the plurality of coupling portions Fc and a cutting portion Ff between adjacent coupling portions Fc, at a boundary between the connected portion Fb and the remaining portion Fa. Accordingly, the connected portion Fb and the remaining portion Fa are cut and not coupled between the adjacent coupling portions Fc. Here, the connected portion Fb includes a first position Pf1 where the connected portion Fb is pressed toward the lower die 30 by the first pressing portion 66e of the pressing unit 6, and a second position Pf2 where the connected portion Fb is pressed toward the lower die 30 by the second pressing portion 66f (to be described later). The coupling portion Fc includes a first coupling portion Fc1, a second coupling portion Fc2, and a third coupling portion Fc3. The first coupling portion Fc1 couples the first position Pf1 and the remaining portion Fa. The second coupling portion Fc2 couples the second position Pf2 and the remaining portion Fa. The third coupling portion Fc3 couples the remaining portion Fa with the third position Pf3 of the connected portion Fb excluding the first position Pf1 and the second position Pf2.

The total number of the first coupling portions Fc1 and the second coupling portions Fc2 is smaller than the number of the third coupling portions Fc3. In this case, the two coupling portions Fc present on the straight line orthogonal to the conveying direction Dc1 and passing through the center Cf of the connected portion Fb may be included in the first coupling portion Fc1 and the second coupling portion Fc2, or may be included in the third coupling portion Fc3.

### (Conveying Unit)

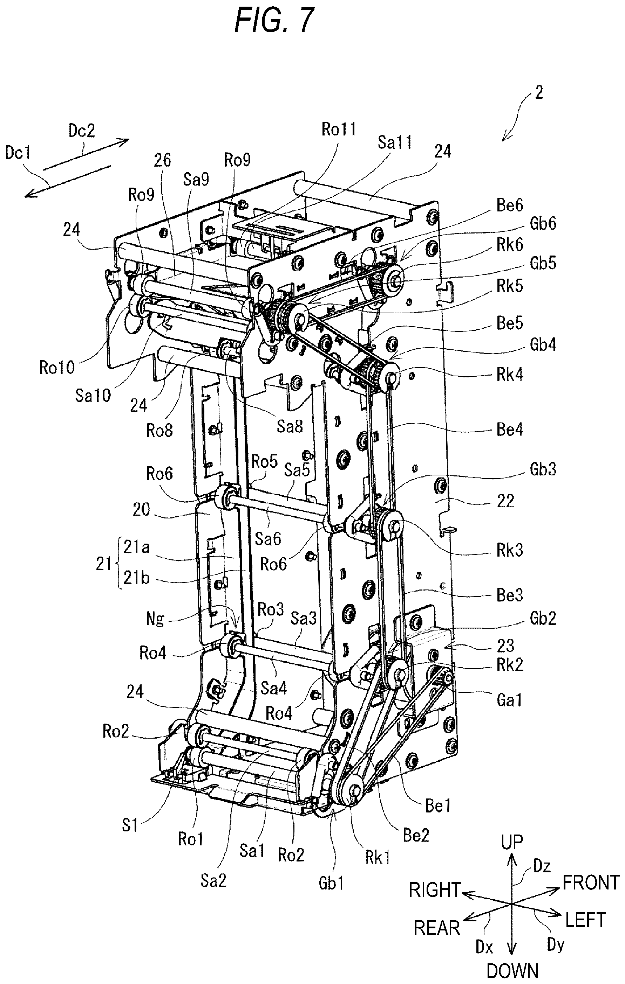

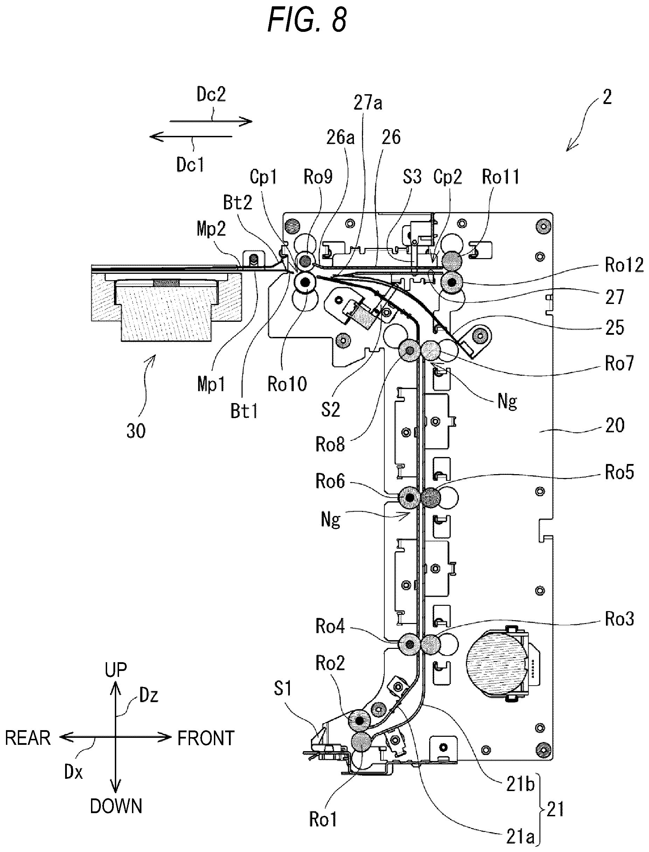

Next, the conveying unit 2 will be described. FIG. 7 is a perspective view illustrating a configuration of the conveying unit 2. FIG. 8 is a side view of the conveying unit 2 in FIG. 7.

Regarding the conveying unit 2, a part of the conveying unit 2 is disposed in front of the printing unit 1, and the entire conveying unit 2 is disposed in front of the die set 3. The conveying unit 2 is configured to convey the printed medium W and the white film F conveyed from the printing unit 1 onto the front member SE, which is supplied prior to the lower die 30, along the conveying direction Dc1 toward the die set 3. Further, the conveying unit 2 is configured to convey, to the collection box 8 along the conveying direction Dc2, the remaining portion Wa of the printed medium W and the remaining portion Fa of the white film F. Accordingly, the remaining portion Wa of the printed medium W and the remaining portion Fa of the white film F are collected in the collection box 8 as discarded portions. The collection box 8 corresponds to a collection container. In the present embodiment, a film conveying process is performed in which the white film F is conveyed by the conveying unit 2 so as to be placed on the front member SE held by the lower die 30 prior to the printed medium W. Since a conveying method of the printed medium W by the conveying unit 2 is the same as a conveying method of the white film F, the conveying of the printed medium W will be representatively described below.

As illustrated in FIGS. 7 and 8, the conveying unit 2 includes support plates 20 and 22, a pair of conveying guides 21, a conveying motor 23, drive rollers Rk1 to Rk6, and endless drive belts Be1 to Be6.

The support plates 20 and 22 extend in the up-down direction Dz and are spaced apart from each other in the left-right direction Dy. The support plate 20 and the support plate 22 are coupled by a plurality of plate coupling shafts 24 extending in the left-right direction Dy. The support plate 20 is provided with the conveying guide 21 that curves forward from a lower end rear portion of the support plate 20 and extends upward. The conveying guide 21 is also provided on the support plate 22. The conveying guide 21 includes a first guide body portion 21a and a second guide body portion 21b. A groove-shaped space is provided between the first guide body portion 21a and the second guide body portion 21b, and ends of the printed medium W in the left-right direction Dy are inserted into the space during conveying. The first guide body portion 21a is bent or curved forward from the lower end rear portion of the support plate 20, extends upward, and is bent or curved rearward. The second guide body portion 21b is bent or curved forward from the lower end rear portion of the support plate 20 and extends upward. The first guide body portion 21a as a whole is disposed behind the second guide body portion 21b.

The conveying motor 23 is provided in the support plate 22. A drive gear Ga1 is connected to a rotary shaft of the conveying motor 23. The drive rollers Rk1 to Rk6 are provided on the support plate 22. A drive gear Gb1 is connected to a rotary shaft of the drive roller Rk1. A drive gear Gb2 is connected to a rotary shaft of the drive roller Rk2. A drive gear Gb3 is connected to a rotary shaft of the drive roller Rk3. A drive gear Gb4 is connected to a rotary shaft of the drive roller Rk4. A drive gear Gb5 is connected to a rotary shaft of the drive roller Rk5. A drive gear Gb6 is connected to a rotary shaft of the drive roller Rk6. The drive rollers Rk1 to Rk6 are located to the left of the support plate 22. The drive roller Rk1 is disposed behind and below the drive gear Ga1. The drive roller Rk2 is disposed in front of the drive roller Rk1 and behind the drive gear Ga1 and is disposed above the drive roller Rk1. The drive roller Rk3 is disposed above the drive roller Rk2. The drive roller Rk4 is disposed above the drive roller Rk3. The drive roller Rk5 is disposed behind and below the drive roller Rk4. The drive roller Rk6 is disposed in front of the drive roller Rk5. The drive belt Be1 is stretched around the drive gear Ga1 and the drive gear Gb1. The drive belt Be2 is stretched around the drive gear Gb1 and the drive gear Gb2. The drive belt Be3 is stretched around the drive gear Gb2 and the drive gear Gb3. The drive belt Be4 is stretched around the drive gear Gb3 and the drive gear Gb4. The drive belt Be5 is stretched around the drive gear Gb4 and the drive gear Gb5. The drive belt Be6 is stretched around the drive gear Gb5 and the drive gear Gb6. With such a configuration, the drive force by the conveying motor 23 is transmitted to the drive roller Rk1, the drive roller Rk2, the drive roller Rk3, the drive roller Rk4, the drive roller Rk5, and the drive roller Rk6 via the drive belts Be1 to Be6.

The first guide body portion 21a and the second guide body portion 21b are provided with notches Ng corresponding to the respective drive rollers Rk2 to Rk4. The drive roller Rk1 includes a drive shaft Sa1 extending in the left-right direction Dy and a pair of drive-side rollers Ro1. A pair of driven-side rollers Ro2 are provided to face the pair of drive-side rollers Ro1, respectively. Each of the pair of driven-side rollers Ro2 is coupled to a driven shaft Sa2. The drive roller Rk2 includes a drive shaft Sa3 extending in the left-right direction Dy and a pair of drive-side rollers Ro3. A pair of driven-side rollers Ro4 are provided to face the pair of drive-side rollers Ro3, respectively. Each of the pair of driven-side rollers Ro4 is coupled to a driven shaft Sa4. The pair of drive-side rollers Ro3 are disposed in the notches Ng of the first guide body portion 21a, and the pair of driven-side rollers Ro4 are disposed in the notches Ng of the second guide body portion 21b. Ends of the printed medium W in the left-right direction Dy are clamped by the drive-side rollers Ro3 and the driven-side rollers Ro4. A configuration corresponding to the drive rollers Rk5 or Rk6 (that is, a pair of drive-side rollers, a pair of driven-side rollers, a drive shaft, and a driven shaft) is the same as a configuration corresponding to the drive roller Rk1, and thus the description thereof will be omitted. A configuration corresponding to the drive rollers Rk3 or Rk4 (that is, a pair of drive-side rollers, a pair of driven-side rollers, a drive shaft, and a driven shaft) is the same as a configuration corresponding to the drive roller Rk2, and thus the description thereof will be omitted.

In a case where the conveying motor 23 is driven, the drive force by the conveying motor 23 is transmitted to the drive rollers Rk1 to Rk6. Accordingly, the printed medium W is conveyed to the lower die 30 by the rotation of the drive-side rollers Ro1 and the driven-side rollers Ro2, the rotation of the drive-side rollers Ro3 and the driven-side rollers Ro4, the rotation of drive-side rollers Ro5 and driven-side rollers Ro6, the rotation of drive-side rollers Ro7 and driven-side rollers Ro8, and the rotation of drive-side rollers Ro9 and driven-side rollers Ro10.

As illustrated in FIG. 8, a conveying guide piece 25 is disposed, between the support plate 20 and the support plate 22, above the second guide body portion 21b and in front of the first guide body portion 21a as a whole. The conveying guide piece 25 has flexibility and is made of, for example, resin. A base end of the conveying guide piece 25 is fixed to the support plates 20 and 22, and a front end of the conveying guide piece 25 is a free end. The front end of the conveying guide piece 25 faces the first guide body portion 21a. A distance between the conveying guide piece 25 and the first guide body portion 21a decreases toward the rear, that is, toward the lower die 30. The printed medium W is guided toward the drive-side rollers Ro9 and the driven-side rollers Ro10 by the first guide body portion 21a and the conveying guide piece 25. Thereafter, the printed medium W is conveyed to the lower die 30 along the conveying direction Dc1 by the drive-side rollers Ro9 and the driven-side rollers Ro10. As described above, the first guide body portion 21a, the second guide body portion 21b, and the conveying guide piece 25 constitute a first conveying path Cp1 of the printed medium W toward the lower die 30 of the die set 3.

The first conveying sensor S1, which is, for example, a contact sensor, is provided behind the drive-side roller Ro1 and the driven-side roller Ro2. The second conveying sensor S2, which is, for example, a contact sensor, is provided between the first guide body portion 21a and the conveying guide piece 25. The second drive circuit 116 drives the conveying motor 23 in a case where the printed medium W supplied from the printing unit 1 is detected by the first conveying sensor S1. In a case where a downstream end of the printed medium W is detected by the second conveying sensor S2, the second drive circuit 116 controls driving of the conveying motor 23 based on a rotation amount of the conveying motor 23 detected by an encoder (not illustrated) immediately after the detection. Accordingly, the printed medium W is conveyed to a predetermined position of the die set 3 with high accuracy.

A conveying guide 26 and a conveying guide piece 27 are provided between the drive-side roller Ro9 and the driven-side roller Ro11 and between a drive-side roller Ro10 and a driven-side roller Ro12. The conveying guide 26 is located above the conveying guide piece 27. The conveying guide 26 extends in the front-rear direction Dx. A trailing end 26a, which is an end on a lower die 30 side, of the conveying guide 26 is bent upward. Meanwhile, the conveying guide piece 27 has flexibility and is made of, for example, resin. The conveying guide piece 27 extends in the front-rear direction Dx. A trailing end 27a of the conveying guide piece 27 is located in front of a trailing end 26a of the conveying guide 26. The trailing end 27a of the conveying guide piece 27 is bent downward. The conveying guide piece 27 intersects the first conveying path Cp1 in a side view illustrated in FIG. 8. In such a configuration, the conveying guide 26 and the conveying guide piece 27 constitute a second conveying path Cp2 of the remaining portions Wa and Fa from the lower die 30 of the die set 3 toward the collection box 8.

In a case where the printed medium W is conveyed along the first conveying path Cp1, a lower surface of the conveying guide piece 27 is pressed by a downstream end of the printed medium W and is bent upward. Accordingly, the conveying guide piece 27 allows conveyance of the printed medium W from the drive-side rollers Ro7 and the driven-side rollers Ro8 to the drive-side rollers Ro9 and the driven-side rollers Ro10. In a case where the printed medium W is conveyed in the conveying direction Dc1 and reaches a predetermined position of the lower die 30, an upstream end of the printed medium W is in a state of being gripped by the drive-side roller Ro9 and the driven-side roller Ro10 and is in a state of being located on a downstream side with respect to the conveying guide piece 27 in the first conveying path Cp1. At this time, the conveying guide piece 27 returns to the state of intersecting the first conveying path Cp1 again due to its flexibility.

As described above, a cutting process of causing the pressing unit 6 (to be described later) to cut the connected portion Wb and the remaining portion Wa of the printed medium W, which is conveyed to the predetermined position of the lower die 30, is performed. Thereafter, a separation process is performed in which the remaining portion Wa is separated from the connected portion Wb and only the remaining portion Wa is discarded. In the separation process, the second drive circuit 116 reversely rotates the conveying motor 23 in a state where the connected portion Wb is pressed against the front member SE disposed on the lower die 30 by the pressing unit 6. In this case, the drive force by the conveying motor 23, which is the drive force by the reverse rotation, is transmitted to the drive roller Rk5 and the drive roller Rk6 via the drive rollers Rk1 to Rk4. Accordingly, the remaining portion Wa is separated from the connected portion Wb. The remaining portion Wa is conveyed in the conveying direction Dc2 after separation, is guided to the second conveying path Cp2 by coming into contact with an outer surface of the conveying guide piece 27, and is conveyed toward the drive-side roller Ro11 and the driven-side roller Ro12. In this case, since the trailing end 27a of the conveying guide piece 27 is bent downward, the remaining portion Wa is easily guided to the second conveying path Cp2. Thereafter, the remaining portion Wa is conveyed while the edge portion We2 of the remaining portion Wa is sandwiched between the drive-side roller Ro11 and the driven-side roller Ro12, and is collected in the collection box 8.

The third conveying sensor S3, which is, for example, a contact sensor, is provided in front of the drive-side roller Ro9 and the driven-side roller Ro10 and behind the drive-side roller Ro11 and the driven-side roller Ro12. It is possible to determine whether the remaining portion Wa is conveyed to the collection box 8 based on a detection result obtained by the third conveying sensor S3. In a case where the remaining portion Wa cannot be detected by the third conveying sensor S3 within a predetermined time after the second drive circuit 116 starts to reversely rotate the conveying motor 23, the control device 110 determines that a jam of the remaining portion Wa occurs. When the remaining portion Wa is still detected after a predetermined time after the remaining portion Wa is detected by the third conveying sensor S3, the control device 110 may determine that a jam of the remaining portion Wa occurs. When it is determined that a jam of the remaining portion Wa occurs, the control device 110 causes the second drive circuit 116 to stop the rotation of the conveying motor 23.

### (Pressing Unit)

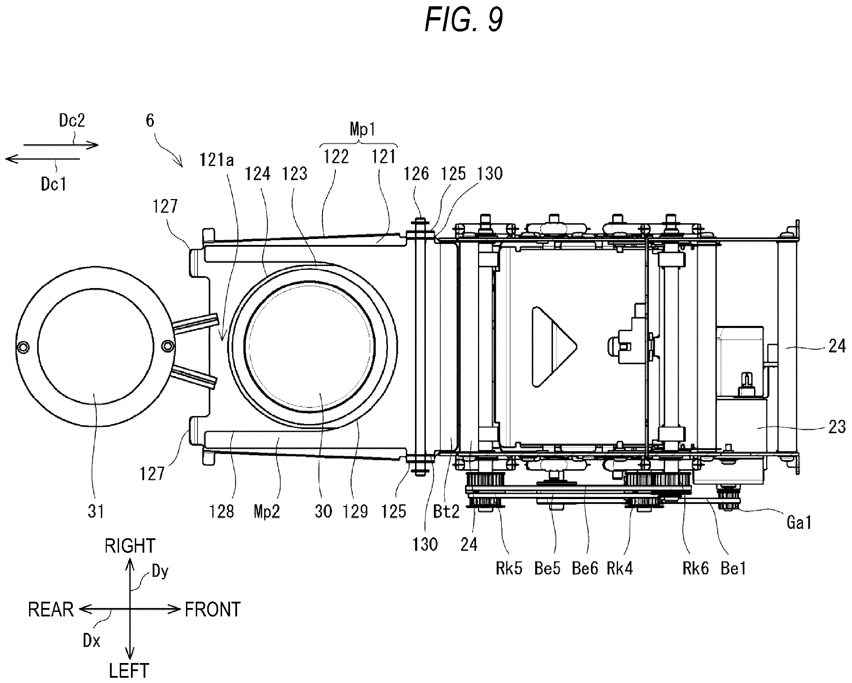

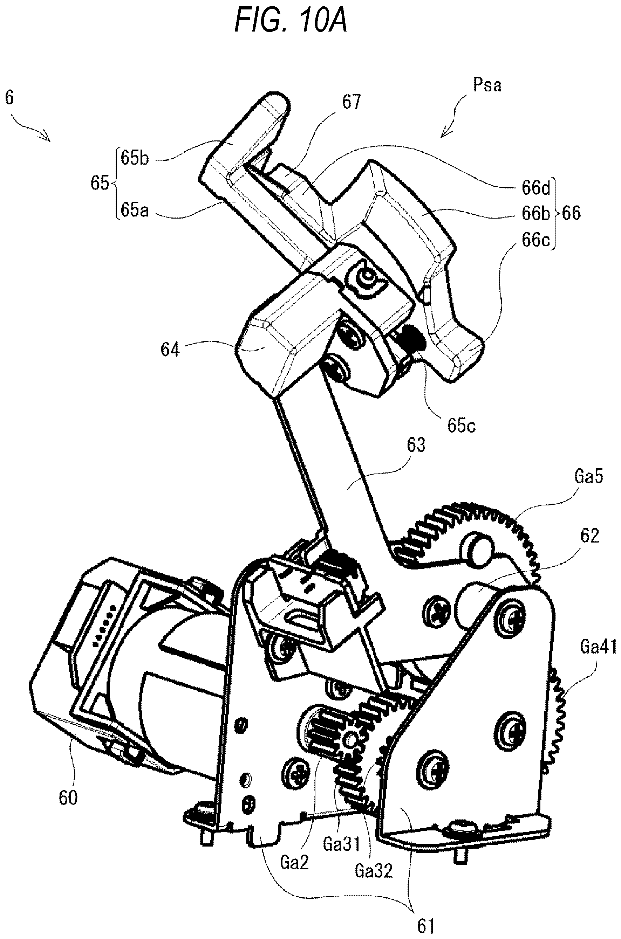

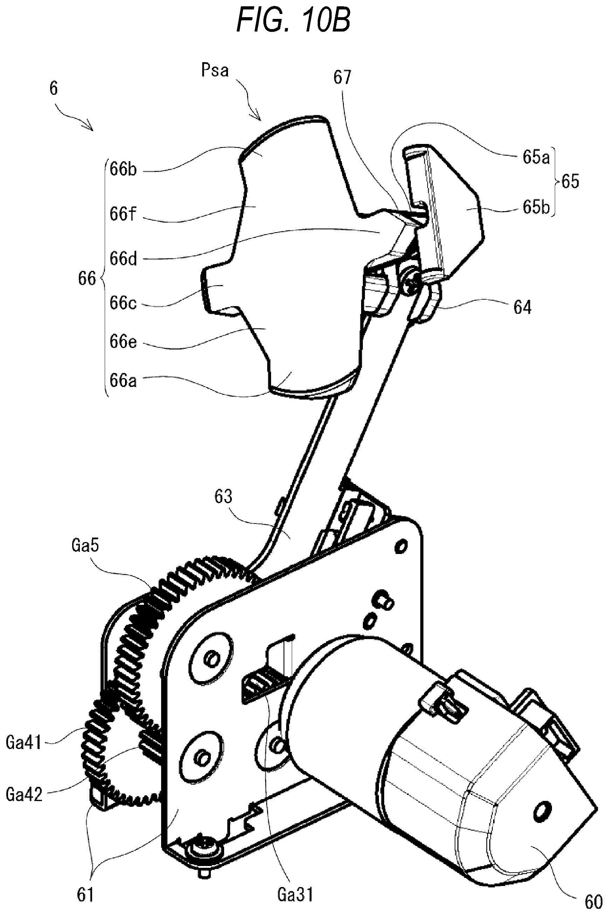

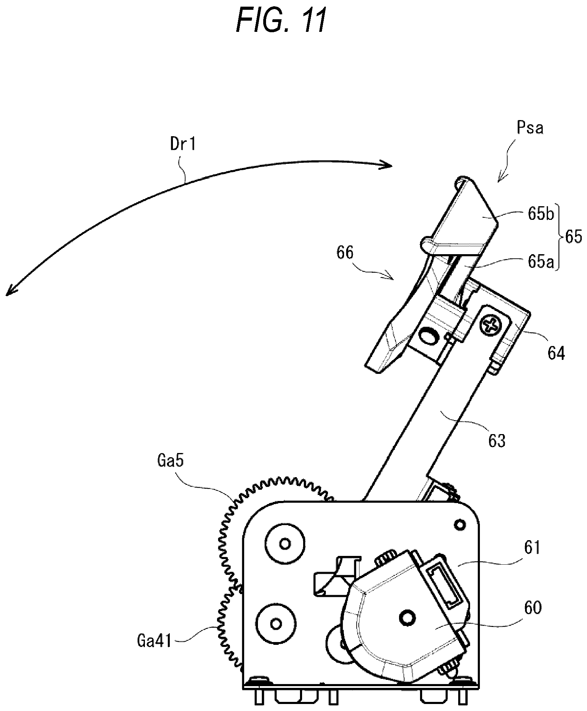

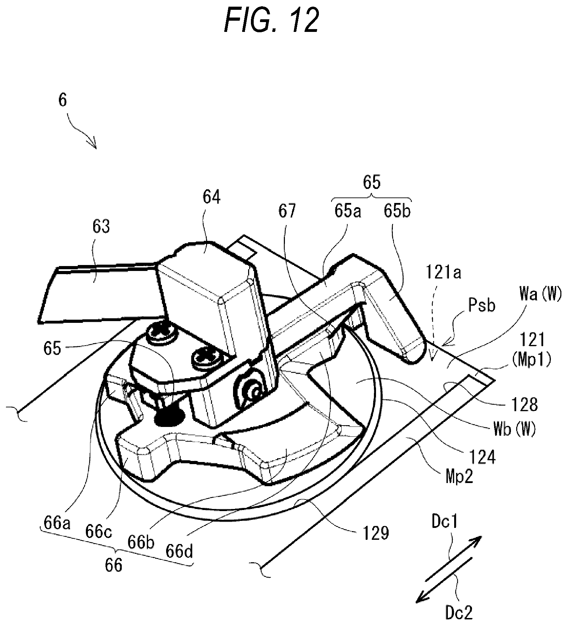

Next, the pressing unit 6 will be described. FIG. 9 is a plan view illustrating a lower plate Mp1 and an upper plate Mp2 that are provided on the lower die 30. FIG. 10A is a perspective view of the pressing unit 6, and FIG. 10B is a perspective view of the pressing unit 6 viewed from a direction different from that of FIG. 10A. FIG. 11 is a diagram illustrating a standby position Psa of a pressing head 66 of the pressing unit 6, and FIG. 12 is a diagram illustrating a pressing position Psb of the pressing head 66 of the pressing unit 6. FIG. 12 illustrates a state before the separation process of separating the remaining portion Wa from the connected portion Wb is performed.

The pressing unit 6 is configured to press the printed medium W and the white film F against the lower die 30. Specifically, the pressing unit 6 is configured to perform a cutting process (a first cutting process) of cutting at least a part of the plurality of coupling portions Fc in the white film F disposed on the front member SE held by the lower die 30. Similarly, the pressing unit 6 is configured to perform a cutting process (the second cutting process) of cutting at least a part of the plurality of coupling portions Wc in the printed medium W disposed on the connected portion Fb disposed on the front member SE (that is, the connected portion Fb after the first cutting process). By the first cutting process and the second cutting process, the connected portion Fb and the connected portion Wb are overlapped on the front member SE held by the lower die 30. Since the first cutting process is basically the same as the second cutting process, the second cutting process by the pressing unit 6 will be described below as a representative example.

As illustrated in FIG. 9, the pressing unit 6 includes the lower plate Mp1 disposed on the lower die 30 and the upper plate Mp2 disposed on the lower plate Mp1. The lower plate Mp1 includes a lower plate body 121 having a substantially rectangular plate shape, and guide side walls 122 erected from left and right side edge portions of the lower plate body 121. A distance between a trailing end of the left guide side wall 122 and a trailing end of the right guide side wall 122 is smaller than a distance between a front end of the left guide side wall 122 and a front end of the right guide side wall 122. The distance between the trailing end of the left guide side wall 122 and the trailing end of the right guide side wall 122 is equal to or slightly larger than a dimension of the printed medium W in the left-right direction (that is, a width dimension) and a dimension of the white film F in the left-right direction. Such guide side walls 122 facilitate positioning of the printed medium W and the white film F conveyed from the conveying unit 2 with respect to the front member SE held by the lower die 30.

The lower plate body 121 is provided with a rectangular notch 123 that opens at a front portion of the lower plate body 121, and a notch 124 that opens adjacent to a trailing end of the notch 123 and protrudes rearward and has a semicircular shape. A diameter of the notch 124 is substantially the same as a diameter of a recess of the lower die 30 (that is, a holding portion of the front member SE). Bearing walls 125 are erected on left and right side edge portions of the front portion of the lower plate body 121. A bearing hole is formed in each bearing wall 125, and a plate support shaft 126 extending in the left-right direction is inserted into each bearing hole. Accordingly, the lower plate Mp1 is swingable up and down with the bearing wall 125 as a base point via the plate support shaft 126. A guide portion Bt1 (FIG. 8) bent downward is provided at a front end of the lower plate body 121. Further, guide pieces 127 extending rearward and having trailing ends curved upward are provided at left and right portions of a trailing end of the lower plate body 121. Since the lower plate Mp1 smoothly rides on upper surfaces of the lower dies 30 and 31 when the lower dies 30 and 31 rotate as to be described later by the guide pieces 127, positioning of the lower plate Mp1 with respect to the lower dies 30 and 31 is easily determined.

The upper plate Mp2 is provided with a rectangular notch 128 that opens at the trailing end of the upper plate Mp2, and a semicircular notch 129 that opens adjacent to a front end of the notch 128. A diameter of the notch 128 is substantially the same as the diameter of the recess of the lower die 30 (that is, the holding portion of the front member SE). Since a rear portion of the upper plate Mp2 is cut out as described above, the rear portion of the lower plate body 121 is exposed at the rear portion.

Bearing walls 130 are erected on left and right side edge portions of a front portion of the upper plate Mp2. Each bearing wall 130 is disposed further inward than the corresponding bearing wall 125. A bearing hole is formed in each bearing wall 130, and the plate support shaft 126 is inserted into each bearing hole. Accordingly, the upper plate Mp2 is swingable up and down with the bearing wall 130 as a base point via the plate support shaft 126. A guide portion Bt2 bent upward is provided at a front end of the upper plate Mp2. The guide portion Bt2, together with the guide portion Bt1, smoothly introduces the printed medium W and the white film F conveyed from the conveying unit 2 between the lower plate Mp1 and the upper plate Mp2.

The upper plate Mp2 and the lower plate Mp1 are disposed to overlap each other in the up-down direction. In a state where the upper plate Mp2 and the lower plate Mp1 are disposed to overlap each other, the semicircular notch 124 of the lower plate Mp1 and the semicircular notch 129 of the upper plate Mp2 are combined with each other to form a circular opening for exposing the recess of the lower dies 30 and 31.

The pressing unit 6 further includes the following components. As illustrated in FIGS. 10A and 10B, the pressing unit 6 includes the pressing motor 60, a pair of support plates 61, a coupling shaft 62, a swing arm 63, a support block 64, a remaining portion pressing head 65, and the pressing head 66 that presses the printed medium W.

The pressing motor 60 is fixed to one support plate 61. A rotary shaft of the pressing motor 60 is rotatably inserted into one support plate 61. A plurality of drive gears Ga2, Ga31, Ga32, Ga41, Ga42, and Ga5 are provided between the one support plate 61 and the other support plate 61. The drive gear Ga2 is connected to a rotary shaft of the pressing motor 60. The drive gear Ga2 meshes with the drive gear Ga31. The drive gear Ga32 is provided coaxially with the drive gear Ga31. The drive gear Ga32 meshes with the drive gear Ga41. The drive gear Ga42 is provided coaxially with the drive gear Ga41. The drive gear Ga42 meshes with the drive gear Ga5. The drive gear Ga5 is provided with the coupling shaft 62 coaxially with the drive gear Ga5 and penetrating the drive gear Ga5. A base end of the swing arm 63 is coupled to the drive gear Ga5 by the coupling shaft 62. For example, a boss is provided on the drive gear Ga5 and is fitted into a recess at the base end of the swing arm 63. In such a configuration, when the pressing motor 60 is rotationally driven, a drive force thereof is transmitted to the drive gears Ga2, Ga31, Ga32, Ga41, Ga42, and Ga5.

The support block 64 is connected to a leading end of the swing arm 63. The support block 64 supports the pressing head 66. In a case where the pressing motor 60 is rotationally driven to rotate the drive gear Ga5, the swing arm 63 rotates in a rotation direction Dr1 illustrated in FIG. 11. In detail, for example, when the drive gear Ga5 rotates forward, the swing arm 63 rotates from the standby position Psa (FIG. 11) which is a position where the pressing head 66 stands by to the pressing position Psb (FIG. 12) which is a position where the connected portion Wb is pressed by the pressing head 66. Meanwhile, for example, in a case where the drive gear Ga5 reversely rotates, the swing arm 63 rotates from the pressing position Psb to the standby position Psa.

The remaining portion pressing head 65 includes a support shaft 65a, a head body portion 65b, and a spring 65c. A base end of the support shaft 65a is connected to the spring 65c. As illustrated in FIG. 12, the support shaft 65a extends along the conveying direction Dc2 in a case where the pressing head 66 is at the pressing position Psb. The head body portion 65b is connected to a leading end of the support shaft 65a. The head body portion 65b is located on the downstream side of the pressing head 66 in the conveying direction Dc2 in a case where the pressing head 66 is at the pressing position Psb. In a case where the head body portion 65b of the pressing head 66 is at the pressing position Psb, the spring 65c biases the head body portion 65b in a direction of pressing the remaining portion Wa of the printed medium W sandwiched between the lower plate Mp1 and the upper plate Mp2. Accordingly, the head body portion 65b is configured to press the remaining portion Wa toward a trailing end central portion 121a of the lower plate body 121.

In the second cutting process, the pressing head 66 of the pressing unit 6 is configured to press the pressing head 66 to a lower position closer to an inner bottom surface 30a2 than a placement surface 30b5 (to be described later) of the lower die 30. The pressing head 66 includes pressing ends 66a, 66b, 66c, and 66d, the first pressing portion 66e, and the second pressing portion 66f that press the connected portion Wb of the printed medium W against the lower die 30. The pressing ends 66a, 66b, 66c, and 66d, the first pressing portion 66e, and the second pressing portion 66f face the connected portion Wb of the printed medium W in a case where the pressing head 66 is at the pressing position Psb. The pressing end 66a and the pressing end 66b are located to the left and right in the left-right direction Dy in a case where the pressing head 66 is at the pressing position Psb. The pressing end 66c and the pressing end 66d are located forward and rearward in the front-rear direction Dx in a case where the pressing head 66 is at the pressing position Psb. The first pressing portion 66e is located between the pressing end 66a and the pressing end 66c. The first pressing portion 66e presses the first position Pw1 of the connected portion Wb in a case where the pressing head 66 is at the pressing position Psb. The second pressing portion 66f is located between the pressing end 66b and the pressing end 66c. The second pressing portion 66f presses the second position Pw2 of the connected portion Wb in a case where the pressing head 66 is at the pressing position Psb. Of the portions of the pressing head 66 facing the connected portion Wb in a case where the pressing head 66 is at the pressing position Psb, a portion excluding the pressing ends 66a, 66b, 66c, and 66d, the first pressing portion 66e, and the second pressing portion 66f form a spherical shape recessed upward. Accordingly, the portion can have a shape along a surface shape of the front member SE.

The first pressing portion 66e is formed to be located further downward than the second pressing portion 66f in a case where the pressing head 66 is at the pressing position Psb. Accordingly, when the swing arm 63 rotates and the pressing head 66 is disposed at the pressing position Psb in the second cutting process, the control device 110 causes the first pressing portion 66e to press the first position Pw1 of the connected portion Wb prior to the second pressing portion 66f. That is, in the second cutting process, the control device 110 causes the first pressing portion 66e to press the first position Pw1 of the connected portion Wb, causes the first pressing portion 66e to press the first position Pw1 of the connected portion Wb, and then causes the second pressing portion 66f to press the second position Pw2 of the connected portion Wb. By such second cutting process, at least the coupling portion Wc1 and the coupling portion Wc2 among the coupling portion Wc1, the coupling portion Wc2, and the coupling portion Wc3 of the printed medium W are cut. Therefore, the coupling portion Wc of the printed medium W has a first portion (that is, the first coupling portion Wc1 and the second coupling portion Wc2) that is cut by the second cutting process, and a second portion (that is, the third coupling portion Wc3) that is not completely cut by at least the second cutting process. Therefore, after the second cutting process, the control device 110 performs the following second separation process of cutting the entire third coupling portion Wc3 of the coupling portion Wc to separate the remaining portion Wa from the connected portion Wb. After the first cutting process, the first separation process of cutting the entire third coupling portion Fc3 of the coupling portion Fc to separate the remaining portion Fa from the connected portion Fb is basically the same as the second separation process. Therefore, the second separation process will be described below as a representative example.

The pressing unit 6 further includes a cutting unit 67. The cutting unit 67 is provided at the pressing end 66d. The cutting unit 67 has a triangular shape. In a case where the first pressing portion 66e is pressed against the first position Pw1 and the second pressing portion 66f is pressed against the second position Pw2, the cutting unit 67 is located on a downstream side in the conveying direction Dc2 with respect to a downstream end in the conveying direction Dc2 of the linear weak portion Wd of the printed medium W. In a case where the first pressing portion 66e is pressed against the first position Pw1 and the second pressing portion 66f is pressed against the second position Pw2, the cutting unit 67 is positioned such that a vertex of a triangular shape is located on an upstream side in the conveying direction Dc2.

In the second separation process, the control device 110 causes the conveying unit 2 to convey the printed medium W in the conveying direction Dc2 which is an opposite direction to the conveying direction Dc1 in a state where the connected portion Wb is pressed by the first pressing portion 66e and the second pressing portion 66f as described above. Accordingly, by cutting the entire third coupling portion Wc3, the remaining portion Wa is separated from the connected portion Wb. At this time, in a state where the remaining portion Wa is pressed against the lower plate body 121 by the head body portion 65b, the linear weak portion Wd is cut by the cutting unit 67 with a downstream end of the linear weak portion Wd in the conveying direction Dc2 as a starting point. Thereafter, the remaining portion Wa of the printed medium W is conveyed to the collection box 8 by the conveying unit 2. That is, the remaining portion Wa of the printed medium W is in a state of surrounding the pressing head 66 only by being separated from the connected portion Wb, and is caught by the pressing head 66 when being conveyed in the conveying direction Dc2 as it is. However, since the remaining portion Wa of the printed medium W has the linear weak portion Wd and the linear weak portion Wd is cut, the remaining portion Wa is divided into a right end and a left end with the linear weak portion Wd as a boundary. The remaining portion Wa of the printed medium W passes through the pressing head 66 while being divided into the right end and the left end with the linear weak portion Wd as a boundary. Therefore, the remaining portion Wa of the printed medium W is conveyed to the collection box 8 without being caught by the pressing head 66.

### (Die set)

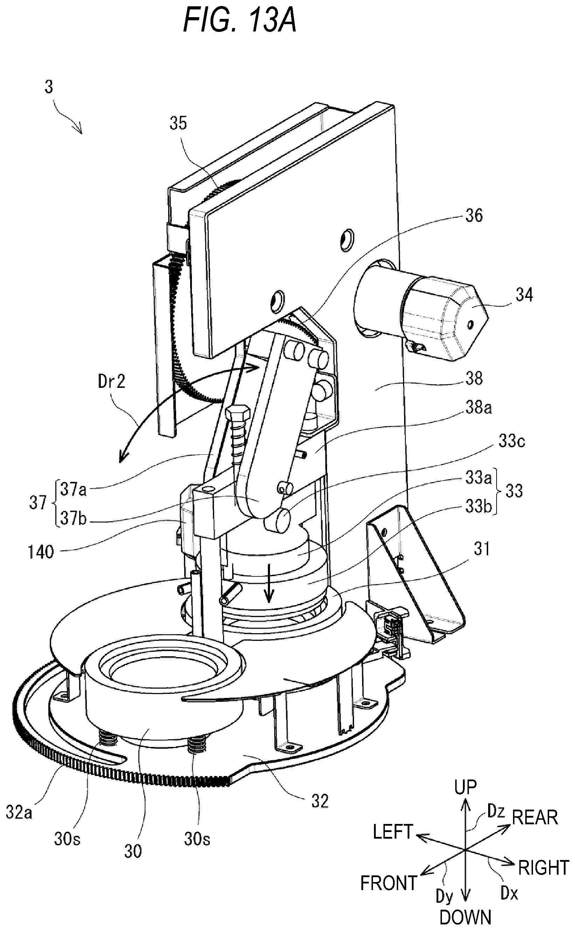

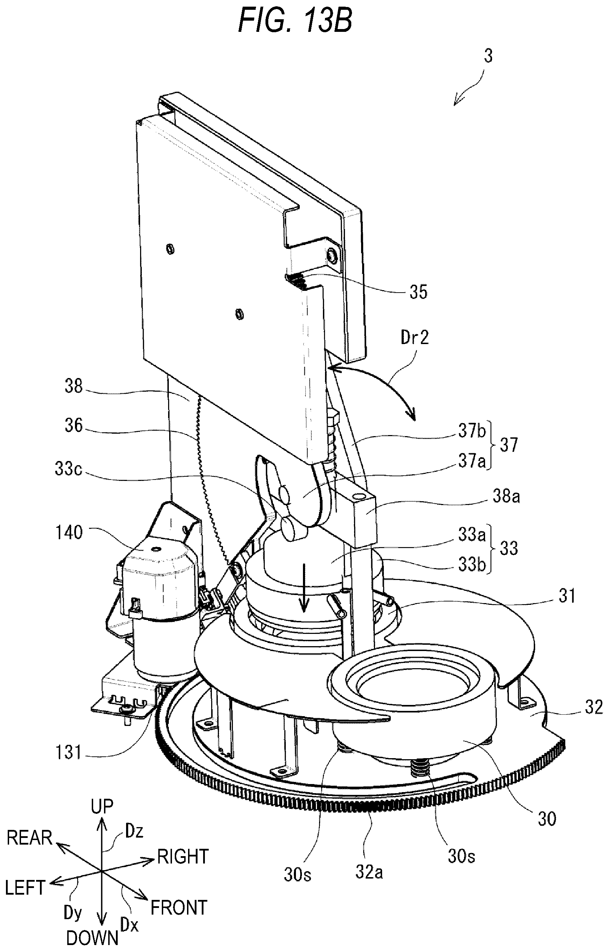

Next, the die set 3 will be described. FIG. 13A is a perspective view of the die set 3, and FIG. 13B is a perspective view of the die set 3 viewed from a direction different from that in FIG. 13A.

The die set 3 is configured to connect the front member SE and the back member BE, and, for example, perform caulking of the front member SE and the back member BE. The die set 3 includes the lower die 30, the lower die 31, the lower die moving motor 140, a rotation support table 32, the upper die 33, the upper die lifting motor 34, a first gear 35, a second gear 36, a pair of rotary cams 37, and a support plate 38, as illustrated in FIGS. 13A and 13B.

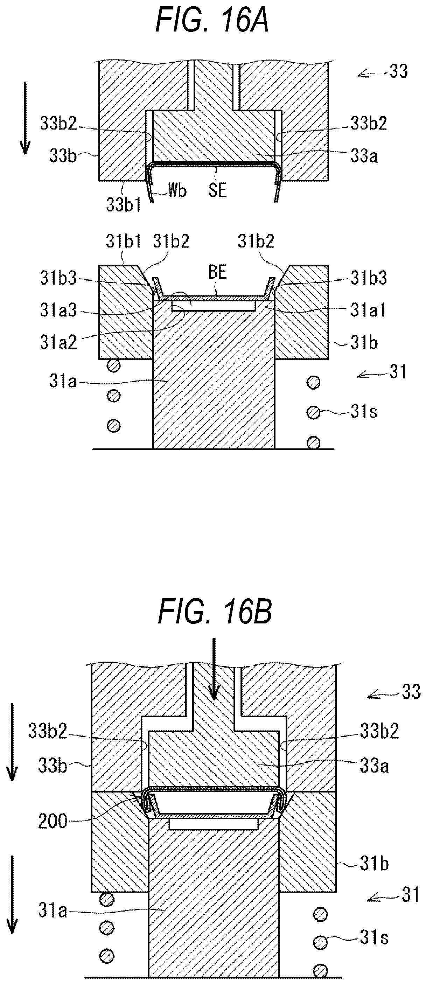

The lower die 30 and the lower die 31 are formed in a circular shape in plan view. The lower die 30 and the lower die 31 are disposed to face each other with reference to a center of the rotation support table 32, and are supported by the rotation support table 32 via a spring 30s and a spring 31s (FIG. 16), respectively. In an initial stage, the lower die 30 is disposed in front of the lower die 31. The rotation support table 32 has a substantially circular shape in plan view. A gear 32a is provided on a side peripheral surface of the rotation support table 32 parallel to an axial direction. The lower die moving motor 140 is provided on a lateral side of the rotation support table 32. A gear 131 is connected to a rotary shaft of the lower die moving motor 140. The gear 131 meshes with the gear 32a of the rotation support table 32. Accordingly, in a case where the lower die moving motor 140 is rotationally driven, a drive force thereof is transmitted to the rotation support table 32 via the gears 131 and 32a. Accordingly, the rotation support table 32 rotates around the up-down direction Dz. By rotating the rotation support table 32, either the lower die 30 or the lower die 31 can be positioned at a position (hereinafter, referred to as a second die position) facing the upper die 33 in the up-down direction Dz. A position facing the second die position in the front-rear direction Dx is referred to as a first die position. The first die position is a position sandwiched between the front member slope 43 of the front member feed unit 4 and the back member slope 53 of the back member feed unit 5. In a case where the lower die 30 is at the first die position, the lower die 30 receives the front member SE from the front member feed unit 4. On the other hand, in a case where the lower die 31 is at the first die position, the lower die 31 receives the back member BE from the back member feed unit 5.

The support plate 38 is erected on the lateral side of the rotation support table 32. The upper die lifting motor 34 is disposed on the support plate 38. A third gear (not illustrated) is connected to a rotary shaft of the upper die lifting motor 34. The third gear meshes with the first gear 35. The first gear 35 is provided with a fourth gear (not illustrated) coaxially with the first gear 35. The fourth gear meshes with the second gear 36. A pair of rotary cams 37 are connected to the second gear 36.

The support plate 38 is provided with a plate member 38a extending in the front-rear direction Dx toward above the lower die 31. The upper die 33 is located below the plate member 38a. The upper die 33 includes an inner die 33a and an annular outer die 33b provided below the inner die 33a coaxially with the inner die 33a and having an inner diameter larger than an outer diameter of the inner die 33a. The inner die 33a is provided with a pair of pressed members 33c provided below the plate member 38a and extending in the left-right direction Dy. One rotary cam 37a of the pair of rotary cams 37 presses one of the pressed members 33c downward, and the other rotary cam 37b of the pair of rotary cams 37 presses the other pressed member 33c downward. In such a configuration, in a case where the upper die lifting motor 34 is rotationally driven, a drive force thereof is transmitted to the second gear 36 via the third gear, the first gear 35, and the fourth gear. Accordingly, the second gear 36 rotates in a rotation direction Dr2, and the pair of rotary cams 37 also rotate in the rotation direction Dr2 accordingly. At this time, the rotary cam 37a pushes down one of the pressed members 33c, and the rotary cam 37b pushes down the other pressed member 33c, so that the inner die 33a can be slid with respect to the outer die 33b and lowered to the lower die 30 or the lower die 31. The upper die 33 can be raised above the lower dies 30 and 31 by reversely rotating the upper die lifting motor 34.

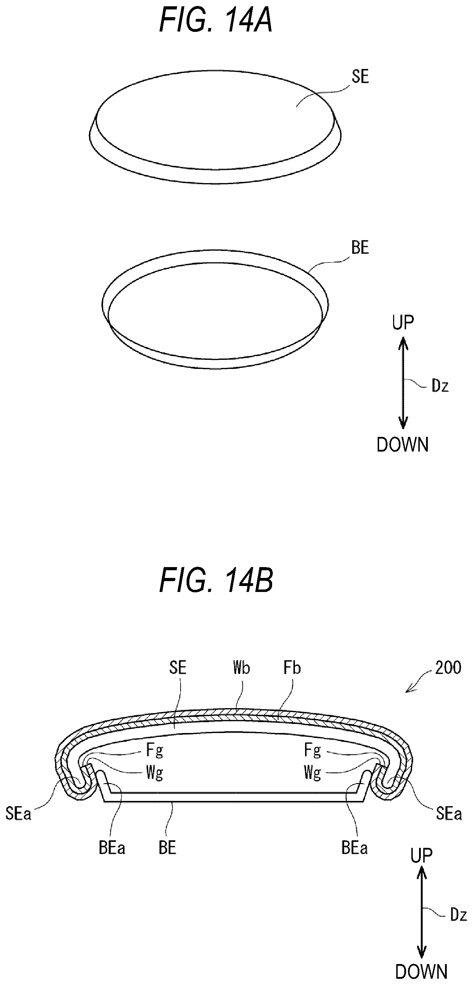

FIG. 14A illustrates perspective views of the front member SE and the back member BE, and FIG. 14B is a cross-sectional view of the button product 200 manufactured by connecting the front member SE and the back member BE illustrated in FIG. 14A.

The front member SE and the back member BE each have a circular shape in plan view. As illustrated in FIGS. 14A and 14B, the front member SE is a member in which a peripheral edge portion SEa protrudes downward, and the back member BE is a member in which a peripheral edge portion BEa protrudes upward. The button product 200 is formed by connecting, specifically caulking, to the back member BE, the front member SE and the connected portion Wb of the printed medium W that are separated and held by the upper die 33. The button product 200 is, for example, a button badge. In a state where a peripheral edge portion Fg of the connected portion Fb and a peripheral edge portion Wg of the connected portion Wb that are disposed on the front member SE are bent and sandwiched between the peripheral edge portion SEa and the peripheral edge portion BEa, the peripheral edge portion SEa and the peripheral edge portion BEa are caulked. Hereinafter, a method of manufacturing the button product 200 using the upper die 33 and the lower dies 30,31 will be described.

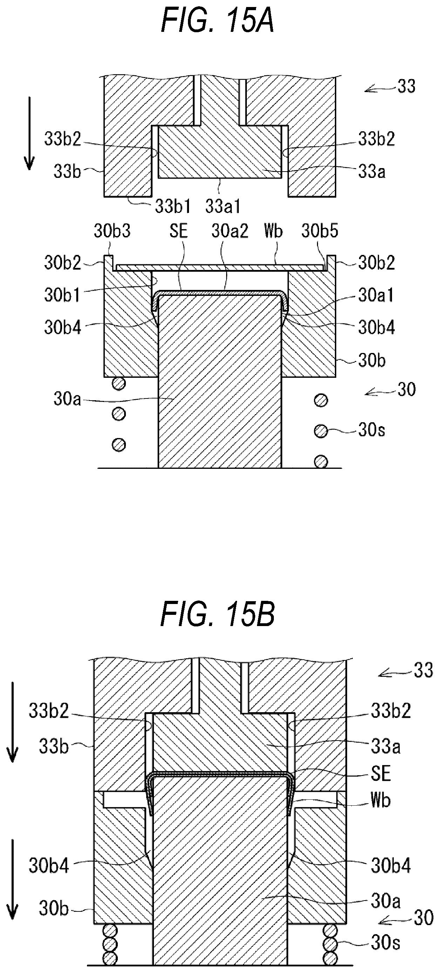

FIG. 15A, FIG. 15B, FIG. 16A, and FIG. 16B are sectional views of the upper die 33 and the lower die 30, 31 for illustrating a caulking process of the front member SE and the back member BE. In FIGS. 15A, 15B, 16A, and 16B, the connected portion Fb is not illustrated. As illustrated in FIG. 15A, the lower die 30 includes, for example, a columnar pedestal 30a, a cylindrical slide die 30b that slides up and down along an outer peripheral surface of the pedestal 30a, and the above-described spring 30s that biases the slide die 30b upward. The pedestal 30a includes an upper end outer peripheral surface 30a1 and the inner bottom surface 30a2. The slide die 30b includes an upper end inner peripheral surface 30b1, a guide wall 30b2, and the placement surface 30b5.

In a case where the lower die 30 is at the first die position, the front member SE is disposed on the inner bottom surface 30a2 which is an upper surface of the pedestal 30a of the lower die 30. The inner bottom surface 30a2 of the pedestal 30a is formed in a circular shape slightly smaller than an inner diameter of the front member SE. The annular guide wall 30b2 is provided at an upper end edge portion of the slide die 30b. The guide wall 30b2 has an upper end surface 30b3. The connected portion Wb is placed on the placement surface 30b5, which is an inner surface of the guide wall 30b2, of an upper surface of the slide die 30b. Further, a diameter of the upper end inner peripheral surface 30b1 of the slide die 30b is larger than a diameter of the upper end outer peripheral surface 30a1 of the pedestal 30a. Accordingly, a gap 30b4 is formed between the upper end inner peripheral surface 30b1 and the upper end outer peripheral surface 30a1. The gap 30b4 also includes, as a part of the gap 30b4, a space between the upper end outer peripheral surface 30a1 of the pedestal 30a and an inner peripheral surface 33b2 of the outer die 33b to be described later. The placement surface 30b5 surrounds the inner bottom surface 30a2 and is located above the inner bottom surface 30a2.

The upper die 33 includes the inner die 33a and the outer die 33b that holds the inner die 33a. The inner die 33a is held so as to be slide downward in the outer die 33b. A pressing surface 33a1 of the inner die 33a has a diameter equal to or slightly larger than a diameter of the inner bottom surface 30a2 of the pedestal 30a.

The outer die 33b has an annular end surface 33b1 as a lower surface of the outer die 33b. After the lower die 30 is moved to the second die position by the rotation of the rotation support table 32, in a case where the outer die 33b is lowered, the end surface 33b1 comes into contact with the upper end surface 30b3 of the guide wall 30b2 of the slide die 30b, and pushes down the slide die 30b to a predetermined position against a biasing force of the spring 30s as illustrated in FIG. 15B. Thereafter, the upper die 33 is raised to separate the front member SE from the lower die 30. A diameter of the inner peripheral surface 33b2 of a lower end of the outer die 33b is slightly larger than the diameter of the inner bottom surface 30a2 of the pedestal 30a and the diameter of the upper end outer peripheral surface 30a1 of the pedestal 30a. Accordingly, when the upper die 33 is crimped to the lower die 30, a peripheral edge portion of the front member SE, a peripheral edge portion of the connected portion Fb, and a peripheral edge portion of the connected portion Wb are folded downward between the upper end outer peripheral surface 30a1 of the pedestal 30a and the inner peripheral surface 33b2 of the outer die 33b, and are disposed in the gap 30b4.

In a case where the lower die 30 is moved to the second die position, the lower die 31 is moved to the first die position accordingly. In a case where the lower die 31 is at the first die position, the back member BE is disposed on an upper surface of the pedestal 31a of the lower die 31. As illustrated in FIG. 16A, the lower die 31 includes, for example, a columnar pedestal 31a, a cylindrical slide die 31b that slides up and down along an outer peripheral surface of the pedestal 31a, and the above-described spring 31s that biases the slide die 31b upward.

The pedestal 31a has an annular upper end portion 31a1. An outer diameter of the upper end portion 31a1 is substantially the same as a diameter of the pressing surface 33a1 of the inner die 33a of the upper die 33. The outer diameter of the upper end portion 31a1 is slightly larger than a diameter of the back member BE. The back member BE is disposed on the upper end portion 31a1 of the pedestal 31a. In a state where the back member BE is disposed on the upper end portion 31a1, a space 31a3 is formed between the back member BE and a groove portion 31a2 provided in the pedestal 31a. For example, when a pin or the like is provided in the back member BE, the pin or the like can be disposed in the space 31a3, and thus interference of the pin or the like with the pedestal 31a can be avoided.

The slide die 31b has an annular end surface 31b1 as an upper surface of the slide die 31b and an inner peripheral surface 31b3 of the slide die 31b. A tapered surface 31b2 inclined downward toward an upper end of the inner peripheral surface 31b3 of the slide die 31b is formed inside the end surface 31b1. The tapered surface 31b2 functions as a guide surface in which the peripheral edge portion of the front member SE and the peripheral edge portion of the connected portion Wb extending outward from the peripheral edge portion are rolled up inside the slide die 31b when the front member SE and the back member BE are caulked.

An upper edge of the inner peripheral surface 31b3 of the slide die 31b is positioned at a position higher than an upper surface of an upper end portion 31a1 of the pedestal 31a. Accordingly, the inner peripheral surface 31b3 functions as a guide surface when the back member BE is located on the upper end portion 31a1 of the pedestal 31a.

After the lower die 31 is moved to the second die position by the rotation of the rotation support table 32 in a state where the back member BE is disposed on the pedestal 31a of the lower die 31, in a case where the outer die 33b of the upper die 33 is lowered, the end surface 33b1 comes into contact with the end surface 31b1 of the slide die 31b, and pushes down the slide die 31b to a predetermined position against the biasing force of the spring 31s. In a case where the outer die 33b of the upper die 33 pushes down the slide die 31b to a predetermined position against the biasing force of the spring 31s, the peripheral edge portion Wg of the connected portion Wb comes into contact with the peripheral edge portion BEa of the back member BE and is woven between the peripheral edge portion SEa of the front member SE and the peripheral edge portion BEa of the back member BE. After the peripheral portion of the connected portion Wb is folded, the peripheral edge portion of the connected portion Wb that covers the peripheral edge portion SEa of the front member SE comes into contact with the tapered surface 31b2 and is guided by the tapered surface 31b2. As the peripheral edge portion of the connected portion Wb is guided, the peripheral edge portion SEa of the front member SE is pressed and deformed by the tapered surface 31b2, and the connected portion Wb is crimped together with the back member BE on the pedestal 31a. As a result, as illustrated in FIG. 16B, the front member SE and the back member BE are caulked so that the peripheral edge portion of the connected portion Wb extending outward from the peripheral edge portion of the front member SE is sandwiched between the front member SE and the back member BE, whereby the button product 200 is manufactured.

### (Take-Out Unit)

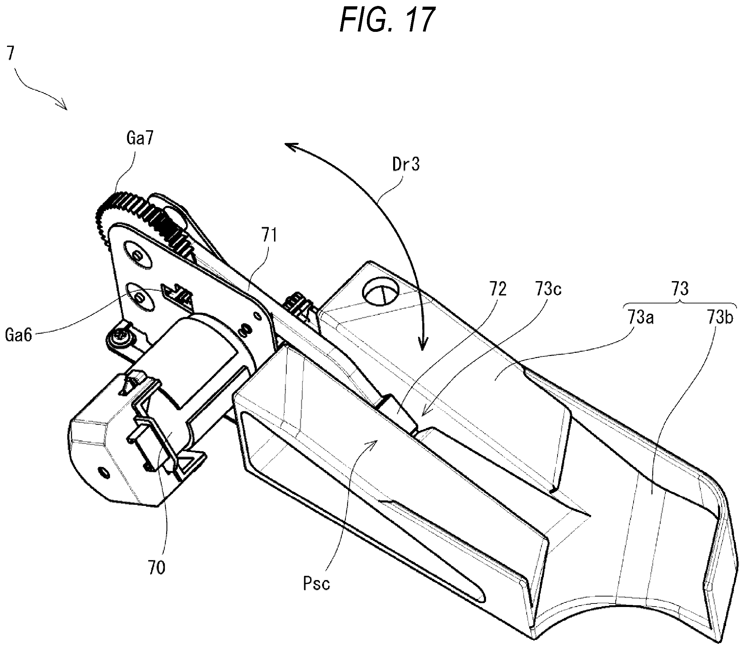

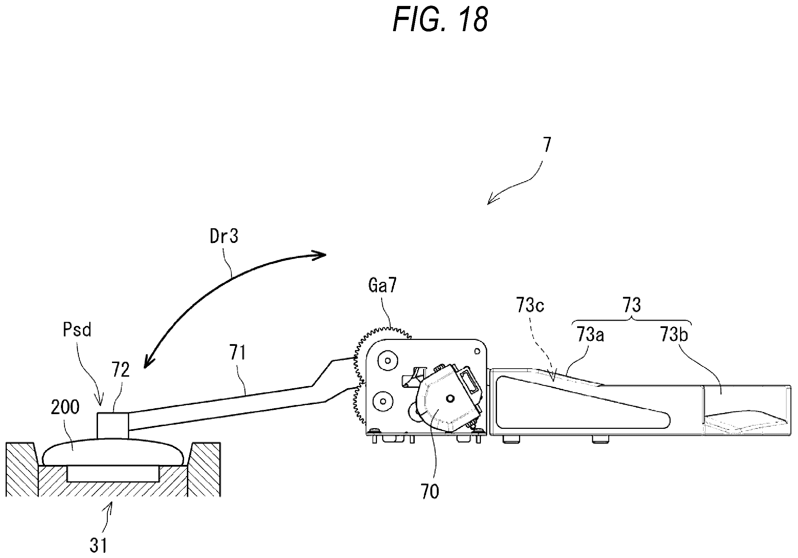

Next, the take-out unit 7 will be described. FIG. 17 is a perspective view of the take-out unit 7, and FIG. 18 is a diagram illustrating the taking-out of the button product 200 by the take-out unit 7 in FIG. 17.

The take-out unit 7 has a function of, after the lower die 31 holding the button product 200 moves from the second die position to the first die position by the rotation of the rotation support table 32, removing the button product 200 from the lower die 31 and guiding the button product 200 to the button product container 9 disposed in front of the take-out unit 7. The take-out unit 7 is disposed in front of the front member feed unit 4. As illustrated in FIG. 17, the take-out unit 7 includes the take-out motor 70, a swing arm 71, a magnet member 72, a seat portion 73, and drive gears Ga6 and Ga7.

A rotary shaft of the take-out motor 70 is connected to the drive gear Ga6. The drive gear Ga6 meshes with the drive gear Ga7. The swing arm 71 is connected to the drive gear Ga7. In a case where the take-out motor 70 is rotationally driven to rotate the drive gear Ga6, a drive force thereof is transmitted to the swing arm 71 via the drive gear Ga7. Accordingly, the swing arm 71 rotates in a rotation direction Dr3 in FIG. 17. Specifically, for example, in a case where the drive gear Ga7 rotates forward, the swing arm 71 rotates from a collection position Psc in FIG. 17 to a taking-out position Psd (FIG. 18) which is a position where the button product 200 held by the lower die 31 is taken out. On the other hand, for example, when the drive gear Ga7 reversely rotates, the swing arm 71 rotates from the taking-out position Psd to the collection position Psc. When the swing arm 71 takes out the button product 200 at the taking-out position Psd, the button product 200 adheres to a magnet member 72 made of, for example, a permanent magnet provided at a leading end of the swing arm 71. With the button product 200 adhering to the magnet member 72, the swing arm 71 rotates from the taking-out position Psd to the collection position Psc.

The seat portion 73 extends toward the button product container 9. The seat portion 73 includes a seat surface 73a and a guide portion 73b. The seat surface 73a is an inclined surface that is lowered toward the guide portion 73. The seat surface 73a is provided with a groove portion 73c in a direction in which the swing arm 71 extends. The collection position Psc is a position where the swing arm 71 enters and fits into the groove portion 73c. An upper surface of the magnet member 72 of the swing arm 71 positioned at the collection position Psc is located at a position lower than an upper end of the groove portion 73c. Immediately before the swing arm 71 rotates from the taking-out position Psd toward the collection position Psc and fits into the groove portion 73c, the button product 200 comes into contact with the seat surface 73. Accordingly, the button product 200 adhering to the magnet member 72 is detached from the magnet member 72. Thereafter, the button product 200 is guided to the guide portion 73 along the inclination of the seat surface 73. The button product 200 is guided by the guide portion 73b and then stored in the button product container 9.

### (Flow of Overall Processing)

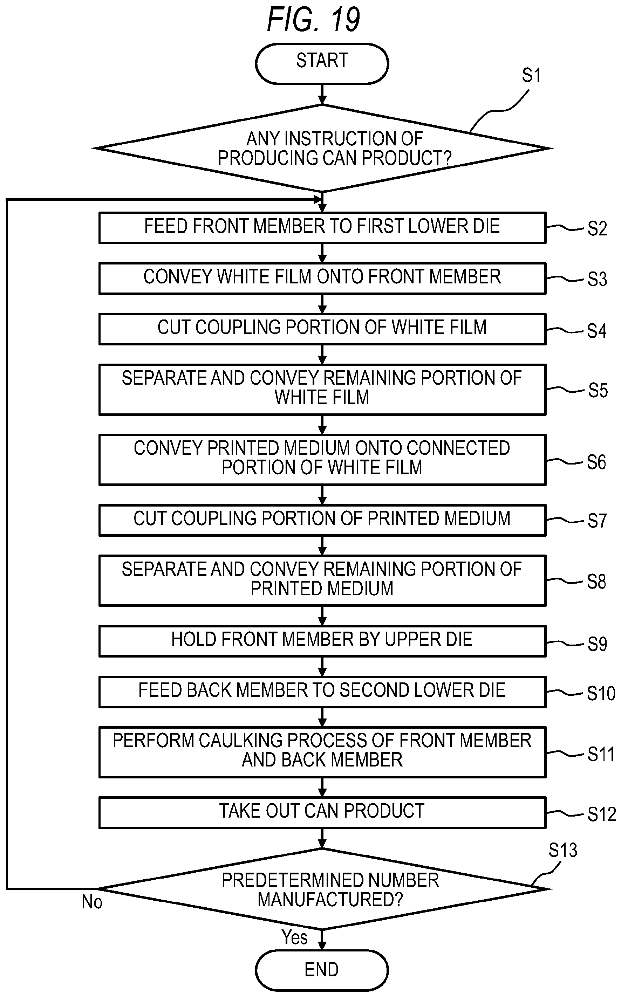

FIG. 19 is a flowchart illustrating a flow of a process by the button product manufacturing device 100. As illustrated in FIG. 19, first, the control device 110 determines whether there is an instruction to manufacture a button product from the user (step S1). When there is no instruction to manufacture a button product (No in step S1), the control device 110 waits as it is.

When there is an instruction to manufacture a button product (Yes in step S1), the control device 110 causes the front member feed unit 4 to feed the front member SE to the lower die 30 (step S2). Next, the control device 110 causes the conveying unit 2 to convey the white film F onto the front member SE (step S3).

Next, the control device 110 causes the pressing unit 6 to cut the coupling portion Fc of the white film F (step S4). Then, the control device 110 causes the conveying unit 2 to separate the remaining portion Fa of the white film F from the connected portion Fb and to convey the separated remaining portion Fa to the collection box 8 (step S5).

Subsequently, the control device 110 causes the conveying unit 2 to convey the printed medium W printed by the printing unit 1 onto the connected portion Fc of the white film F (step S6). Next, the control device 110 causes the pressing unit 6 to cut the coupling portion Wc of the printed medium W (step S7). Then, the control device 110 causes the conveying unit 2 to separate the remaining portion Wa of the printed medium W from the connected portion Wb and to convey the separated remaining portion Wa to the collection box 8 (step S8).

Next, the control device 110 causes the rotation support table 32 to move the lower die 30 from the first die position to the second die position such that the lower die 30 is located below the upper die 33 in the die set 3, and then causes the upper die 33 to hold the front member SE and the connected portions Wb and Fb that are held by the lower die 30 (step S9). The control device 110 causes the back member feed unit 5 to feed the back member BE to the lower die 31 that is moved to the first die position along with the movement of the lower die 30 (step S10).

Subsequently, the control device 110 causes the rotation support table 32 to move the lower die 31 from the first die position to the second die position such that the lower die 31 holding the front member SE and the connected portions Wb and Fb is located below the upper die 33, and then causes the upper die 33 to be lowered and performs a caulking process (step S11). Accordingly, the button product 200 is manufactured. Thereafter, the control device 110 causes the rotation support table 32 to move the lower die 31 from the second die position to the first die position such that the lower die 31 holding the button product 200 is located at the first die position, and then causes the take-out unit 7 to take out the button product 200 (step S12). Accordingly, the button product 200 is placed into the button product container 9. After the taking-out of the button product 200 by the take-out unit 7 is finished, the control device 110 causes the rotation support table 32 to move the lower die 30 at the second die position to the first die position.

Thereafter, the control device 110 determines whether a predetermined number of button products 200 is manufactured (step S13). When the predetermined number of button products 200 is not manufactured (No in step S13), the control device 110 returns to the process of step S2 and repeats the subsequent process. On the other hand, when the predetermined number of button products 200 is manufactured (Yes in step S13), the control device 110 ends the button product manufacturing process.

As described above, according to the button product manufacturing device 100 in the present embodiment, the printed medium W is conveyed by the conveying unit 2 above the front member SE supported by the lower die 30. Accordingly, the conveying accuracy of the printed medium W with respect to the front member SE is improved. Therefore, the button product 200 can be manufactured with high accuracy. In addition, a labor of the user is not required for manufacturing the button product 200.

In the present embodiment, the control device 110 performs a process of causing the conveying unit 2 to convey the printed medium W onto the front member SE supported by the lower die 30. Accordingly, the conveying of the printed medium W with respect to the front member SE is appropriately controlled.

In the present embodiment, after the conveying process of the printed medium W with respect to the front member SE, at least the first coupling portion Wc1 and the second coupling portion Wc2 of the coupling portion Wc are cut by pressing at least the connected portion Wb of the printed medium W against the lower die 30 by the pressing unit 6. In a state where the connected portion Wb is pressed by the first pressing portion 66e and the second pressing portion 66f, the printed medium W is conveyed by the conveying unit 2 in the conveying direction Dc2 which is an opposite direction to the conveying direction Dc1, so that the remaining portion Wa is separated from the connected portion Wb. As described above, the two-stage processes of the cutting process and the separation process makes it easier to separate the remaining portion Wa from the connected portion Wb than in a case where only the separation process is performed.

Further, in the present embodiment, since the coupling portion Wc forms a weak portion having a smaller strength than the connected portion Wb and the remaining portion Wa, the coupling portion Wc is easily cut in the cutting process.

In the present embodiment, after the separation process, the conveying unit 2 conveys the remaining portion Wa of the printed medium W in the conveying direction Dc2, so that the remaining portion Wa is conveyed to the collection box 8. Accordingly, the remaining portion Wa can be easily discarded to the collection box 8 only by the conveyance by the conveying unit 2.

In the present embodiment, the total number of the first coupling portions Wc1 and the second coupling portions Wc2 is smaller than the number of the third coupling portions Wc3. Accordingly, in the cutting process, only the first coupling portion Wc1 and the second coupling portion Wc2 are easily cut without cutting the third coupling portion Wc3 of the coupling portion Wc as much as possible.

In the present embodiment, the strength of the linear weak portion Wd of the printed medium W is smaller than that of the connected portion Wb and the remaining portion Wa. Accordingly, when the remaining portion Wa is conveyed in the conveying direction Dc2 by the conveying unit 2, the linear weak portion Wd is easily cut by the cutting unit 67.

Further, in the present embodiment, one front member SE supplied from the front member stocker 40 onto the front member slope 43 is pushed out by the pusher main body 45a and sent out in the feed direction D1 toward the lower die 30. Accordingly, the front member SE can be supplied to the lower die 30 with high accuracy.

Further, in the present embodiment, since the acute angle formed by the first straight line L1 and the second straight line L2 is larger than 0 degrees and equal to or smaller than 30 degrees, a dimension of the button product manufacturing device 100 in the left-right direction Dy can be made relatively small, and thus the button product manufacturing device 100 can be made compact.

In the present embodiment, the front member slope 43 has a notch 43a at a downstream end of the front member SE in the feed direction D1. Accordingly, when the front member SE is supplied to the lower die 30 from the downstream end of the front member slope 43, it is possible to limit or prevent the upstream end of the front member SE (that is, an end on a side opposite to a side where lower die 30 is present) from being caught by the front member slope 43.

Further, in the present embodiment, the white film F is conveyed onto the front member SE by the conveying unit 2 prior to the printed medium W. The front member SE and the back member BE in which the connected portion Wb of the printed medium W is crimped onto the connected portion Fb of the white film F are crimped. Accordingly, in the button product 200, the background of an image or the like printed on the connected portion Wb can be made white, thereby improving the appearance of the image.

### (Modifications)

The present invention is not limited to the above-described embodiment, and modifications can be adopted without departing from the gist of the present invention. For example, the present invention is modified as follows.

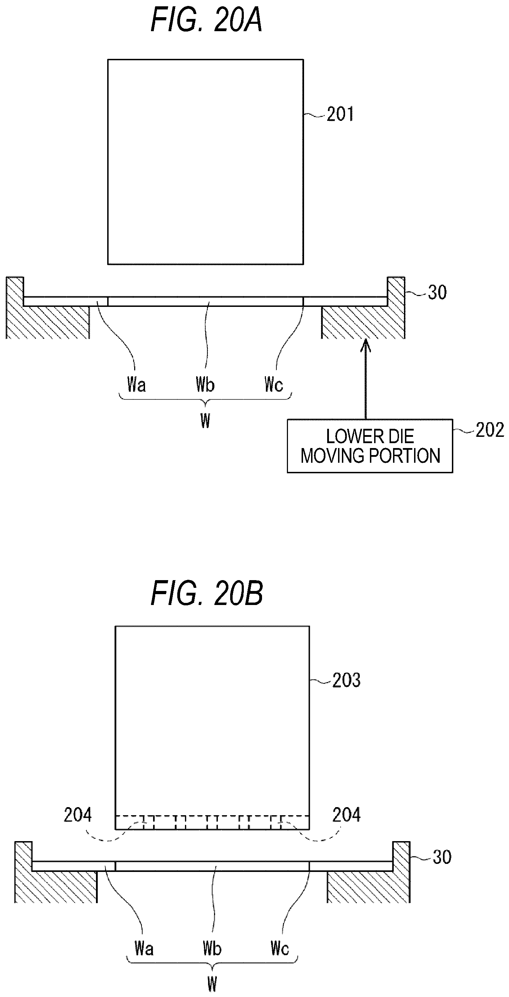

FIG. 20A is a diagram illustrating a first modification of a cutting configuration of the coupling portion Wc of the printed medium W, and FIG. 20B is a diagram illustrating a second modification of the cutting configuration of the coupling portion Wc of the printed medium W. As illustrated in FIG. 20A, the button product manufacturing device 100 may include a pressed portion 201 against which the printed medium W is pressed, and a lower die moving portion 202 that moves the lower die 30 holding the printed medium W in a direction approaching and a direction separating from the pressed portion 201. After the conveying process of the printed medium W to the lower die 30, the control device 110 causes the lower die moving portion 202 to move the lower die 30 to approach the pressed portion 201. Accordingly, a pressing process of cutting the coupling portion Wc by pressing the connected portion Wb of the printed medium W against the pressed portion 201 may be performed.

As illustrated in FIG. 20B, the button product manufacturing device 100 may include a suction device 203 disposed at a position different from a position of the lower die 30. The suction device 203 has a plurality of suction holes 204 on a side facing the lower die 30. After the conveying process of the printed medium W to the lower die 30, the control device 110 may perform a cutting process of causing the suction device 203 to suck the connected portion Wb of the printed medium W to cut the coupling portion Wc.

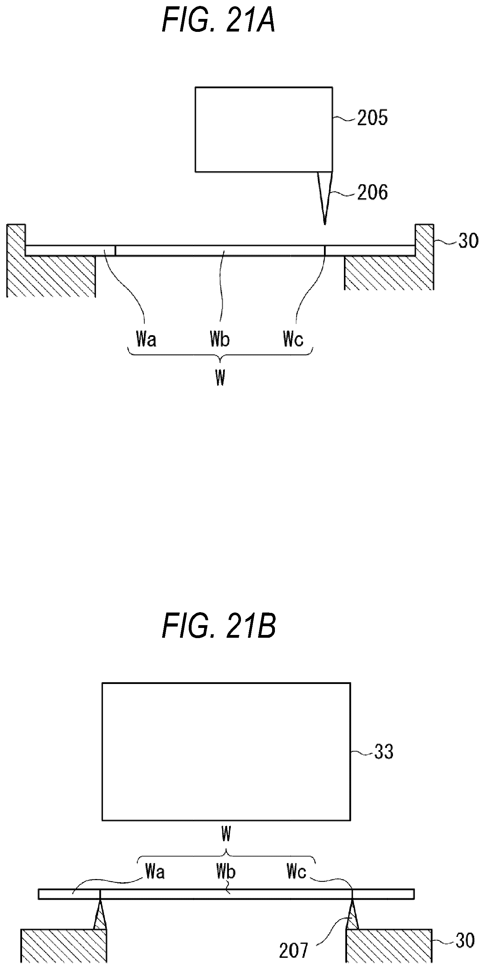

FIG. 21A is a diagram illustrating a third modification of the cutting configuration of the coupling portion Wc of the printed medium W, and FIG. 21B is a diagram illustrating a fourth modification of the cutting configuration of the coupling portion Wc of the printed medium W. As illustrated in FIG. 21A, the button product manufacturing device 100 may include a cutter device 205 movable in parallel to the printed medium W. The cutter device 205 includes a cutter 206 on a side facing the lower die 30. After the conveying process of the printed medium W to the lower die 30, the control device 110 may perform a cutting process of causing the cutter 206 of the cutter device 205 to cut the coupling portion Wc. The cutter 206 is movable back and forth in the up-down direction from a main body of the cutter device 205, and moves back and forth so as to come into contact with the printed medium W when cutting the coupling portion Wc, and not to come into contact with the printed medium W when not cutting the coupling portion Wc.

Further, in the button product manufacturing device 100, as illustrated in FIG. 21B, the lower die 30 may include a cutter 207 on a surface facing the printed medium W. After the conveying process of the printed medium W to the lower die 30, the control device 110 may perform a cutting process of moving the upper die 33 to approach the lower die 30 and pressing the upper die 33 against the printed medium W to cause the upper die 33 and the cutter 207 to cut the coupling portion Wc.

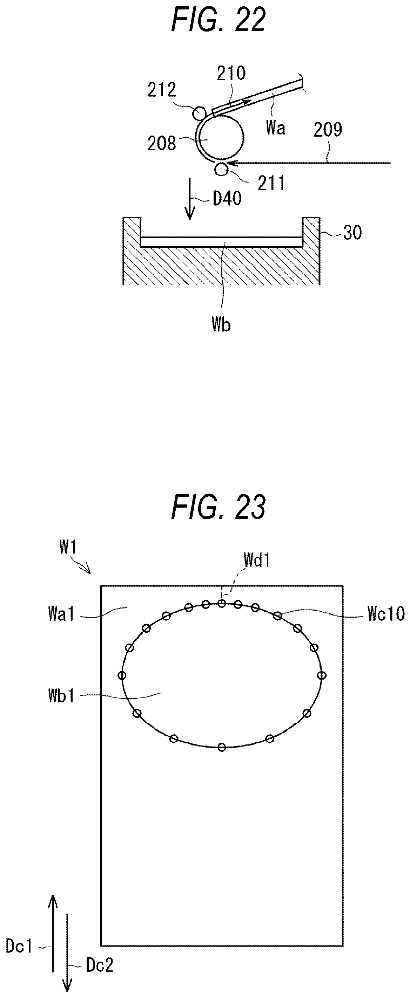

FIG. 22 is a diagram illustrating a fifth modification of the cutting configuration of the coupling portion Wc of the printed medium W. As illustrated in FIG. 22, a conveying unit 208 having a first conveying path 209 along which the printed medium W is conveyed toward the lower die 30 and a second conveying path 210 that is a conveying path different from the first conveying path 209 and in an opposite direction to the first conveying path 209 and along which the printed medium W is conveyed in a direction away from the lower die 30 may be adopted. The conveying unit 208 includes a conveying roller, and further includes a driven roller 211 constituting the first conveying path 209 and a driven roller 212 constituting the second conveying path 210. The first conveying path 210 has a U shape. Specifically, the second conveying path 210 extends along a direction folded back in an opposite direction to the first conveying path 209 with the downstream end of the first conveying path 209 as a base point. The control device 110 causes the conveying unit 208 to convey the connected portion Wb of the printed medium W and the remaining portion Wa along the first conveying path 209. In this case, when the printed medium W is folded back from the first conveying path 209 to the second conveying path 210, the connected portion Wb of the printed medium W is separated from the remaining portion Wa and falls toward the lower die 30 along the direction D40. Accordingly, the connected portion Wb is supplied to the lower die 30. On the other hand, the remaining portion Wa after the connected portion Wb is separated is conveyed along the second conveying path 210. Accordingly, only the remaining portion Wa of the printed medium W is cut and conveyed along the second conveying path 210.

FIG. 23 is a diagram illustrating a modification of a shape of the connected portion Wb of the printed medium W. As illustrated in FIG. 23, the printed medium W1 may include, for example, a connected portion Wb1 having an elliptical shape in plan view, a remaining portion Wa1 different from the connected portion Wb1, a plurality of coupling portions Wc10 coupling the connected portion Wb1 and the remaining portion Wa1, and a linear weak portion Wd1. Alternatively, the printed medium W may be formed in a circular shape in plan view. In this case, the cutting process by the pressing unit 6 and the separation process by the conveying unit 2 are not required, which is simple. The shape of the connected portion Wb is not limited to the above-described shape, and various shapes can be adopted.

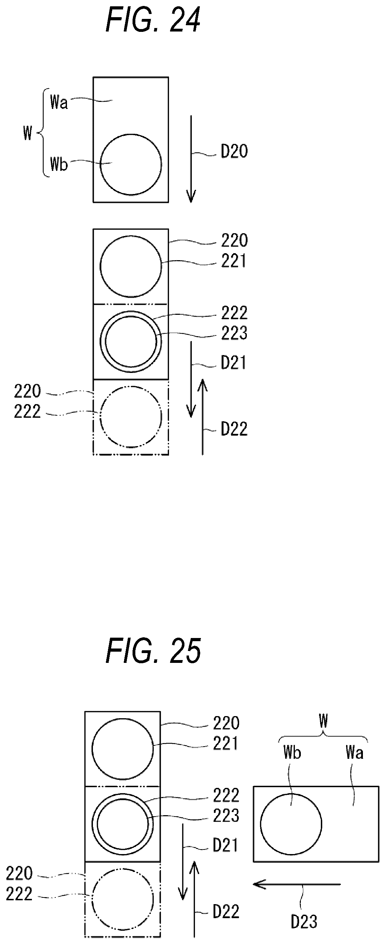

FIG. 24 is a diagram illustrating a first modification of a relation between the conveying direction of the printed medium W and movement directions of the two lower dies 221, 222. FIG. 25 is a diagram illustrating a second modification of a relation between the conveying direction of the printed medium W and the movement directions of the two lower dies 221, 222.

The conveying direction of the printed medium W and the conveying directions of the two lower dies 221, 222 may be the same. In this case, as an example, as illustrated in FIG. 24, the printed medium W is conveyed along a conveying direction D20. The two lower dies 221, 222 are supported by a slide portion 220. The lower die 222 is disposed on a downstream side of the lower die 221 in the conveying direction D20. The slide portion 220 is slidable in a movement direction D21 which is the same direction as the conveying direction D20 and a movement direction D22 which is an opposite direction to the movement direction D21 while holding the lower dies 221, 222. When the slide portion 220 is at an initial position (that is, a position before moving in the movement direction D21), the upper die 223 is positioned above the lower die 222. For example, when the slide portion 220 is at the initial position, the front member SE is conveyed to the lower die 221 by a feed unit (not illustrated). Thereafter, the printed medium W is conveyed in the conveying direction D20 by a conveying unit (not illustrated) onto the front member SE held by the lower die 221. When the lower die 222 is positioned at a predetermined position to which the slide portion 220 has moved along the movement direction D21, the back member BE is supplied to the lower die 222 by the feed unit (not illustrated), and at this time, the front member SE held by the lower die 221 moved below the upper die 223 is held by the upper die 223 by lowering the upper die 223. Thereafter, when the slide portion 220 moves in the movement direction D22 and returns to the initial position, the caulking process may be performed by lowering the upper die 223 holding the front member SE with respect to the lower die 222 holding the back member BE.

As another example, as illustrated in FIG. 25, the printed medium W is conveyed along a conveying direction D23 which is a direction perpendicular to the movement directions D21 and D22 of the slide portion 220. The lower die 222 is disposed on the downstream side of the lower die 221 in the movement direction D21. When the slide portion 220 is at the above-described initial position, the front member SE is conveyed to the lower die 221 by the feed unit (not illustrated). When the lower die 222 is positioned at the predetermined position to which the slide portion 220 has moved along the movement direction D21, the back member BE is supplied to the lower die 222 by the feed unit (not illustrated). At this time, the printed medium W is conveyed in the conveying direction D20 by the conveying unit (not illustrated) onto the front member SE held by the lower die 221 moved below the upper die 223, and then the front member SE held by the lower die 221 is held by the upper die 223 by lowering the upper die 223. Thereafter, when the slide portion 220 moves in the movement direction D22 and returns to the initial position, the caulking process may be performed by lowering the upper die 223 holding the front member SE with respect to the lower die 222 holding the back member BE.

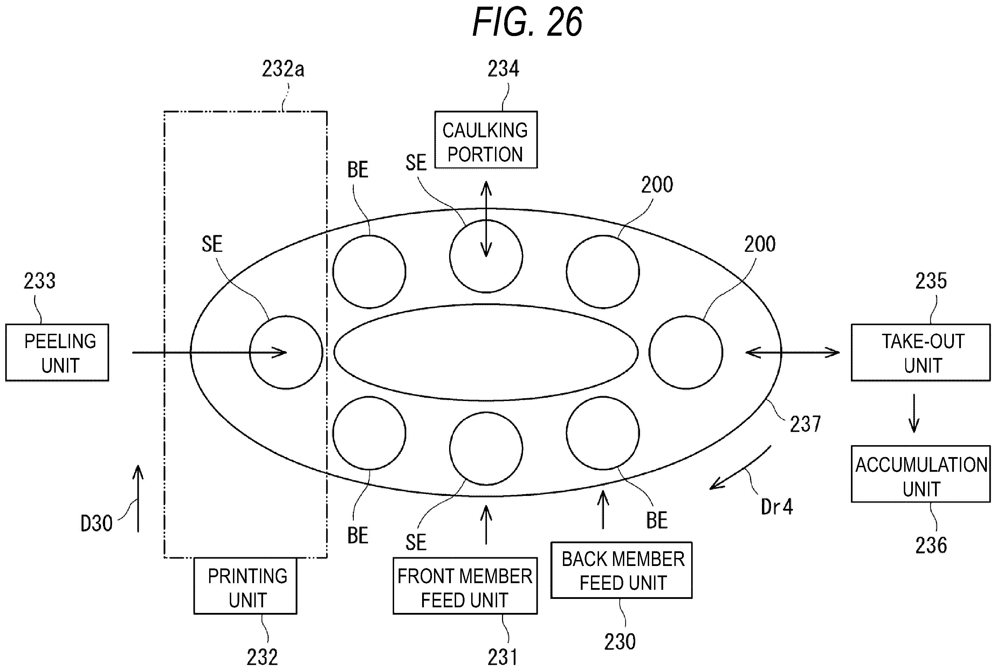

Alternatively, a configuration based on the following production line may be adopted. FIG. 26 is a diagram illustrating a relation between the conveying direction of the printed medium W and movement directions of the front member SE and the back member BE. As illustrated in FIG. 26, the front member SE and the back member BE may be conveyed along, for example, an annular conveying path 237. The conveying path 237 rotates in a rotation direction Dr4 in a state where the front member SE and the back member BE are alternately disposed. Around the conveying path 237, a back member feed unit 230, a front member feed unit 231, a printing unit 232, a peeling unit 233, a caulking unit 234, and a take-out unit 235 are provided in this order along the rotation direction Dr4. The back member BE is supplied to the conveying path 237 by the back member feed unit 230. The front member SE is supplied to the conveying path 237 by the front member feed unit 231. When the front member SE is conveyed to a predetermined peeling position by the peeling unit 233 in the conveying path 237, the printed medium W on which printing is performed by the printing unit 232 is conveyed along the conveying direction D30 and is disposed on the front member SE. In this state, the remaining portion Wa of the printed medium W is peeled off by the peeling unit 233, whereby the remaining portion Wa is separated from the connected portion Wb. In the caulking unit 234, after the front member SE on which the connected portion Wb is disposed is temporarily held by the upper die, the back member BE on an upstream side in the rotation direction Dr4 is conveyed to a predetermined caulking position in the conveying path 237, and the caulking process of the back member BE and the front member SE is performed to manufacture the button product 200. The manufactured button product 200 is conveyed to a predetermined taking-out position by the take-out unit 235 along the conveying path 237, and then is taken out by the take-out unit 235 and accumulated in an accumulation unit 236.

In the above embodiment, the lower plate body 121 is provided with the rectangular notch 123 that opens at the front portion of the lower plate body 121, and the notch 124 that opens adjacent to the trailing end of the notch 123 and protrudes rearward and has a semicircular shape. However, the present invention is not limited thereto. The lower plate body 121 may be provided with a through hole. Since the notch 123 opens at the front portion of the lower plate body 121, the material cost can be reduced. When the lower plate body 121 is desired to have strength, it is preferable to provide a through hole.

In the above embodiment, the notch 124 has a convex and semicircular shape. However, the present invention is not limited thereto. The notch 124 may have a rectangular shape. The notch 124 may have three or more corners.

Further, in the above embodiment, the bearing wall 125 is erected on the lower plate body 121. The lower plate body 121 and the bearing wall 125 may be integrally formed of the same material. Further, the lower plate body 121 and the bearing wall 125 may be separate members, and the lower plate body 121 and the bearing wall 125 may be connected to each other. When the lower plate body 121 and the bearing wall 125 are separate members, the lower plate body 121 and the bearing wall 125 may be made of the same material or different materials.

Further, in the above embodiment, the bearing wall 130 is erected on the upper plate Mp2, and the upper plate Mp2 and the bearing wall 130 may be integrally formed of the same material. The upper plate Mp2 and the bearing wall 130 may be separate members, and the upper plate Mp2 and the bearing wall 130 may be connected to each other. When the upper plate Mp2 and the bearing wall 130 are separate members, the upper plate Mp2 and the bearing wall 130 may be made of the same material or different materials.

In the above-described embodiment, the second drive circuit 116 drives the conveying motor 23 when the printed medium W supplied from the printing unit 1 is detected by the first conveying sensor S1. The control device 110 performs a process of causing the upper die 33 to separate the front member SE and the connected portion Wb of the printed medium W from the lower die 30, and a process of connecting, to the back member BE, the front member SE and the connected portion Wb of the printed medium W that are separated by the upper die 33. However, the control device 110 may additionally perform a process of causing the conveying unit 2 to convey the printed medium W onto the front member SE supported by the lower die 30. That is, the control device 110 performs a process of causing the conveying unit 2 to conveying the printed medium W onto the front member SE supported by the lower die 30, a process of causing the upper die 33 to separate the front member SE and the connected portion Wb of the printed medium W from the lower die 30, and a process of connecting, to the back member BE, the front member SE and the connected portion Wb of the printed medium W that are separated by the upper die 33.

The control device 110 may cause the second drive circuit 116 to drive the conveying unit 2 after an image is printed on the printed medium W by the printing unit 1, instead of causing the second drive circuit 116 to drive the conveying motor 23 when the printed medium W is detected by the first conveying sensor S1. The control device 110 may cause the second drive circuit 116 to drive the conveying unit 2 before an image is printed on the printed medium W by the printing unit 1, instead of causing the second drive circuit 116 to drive the conveying motor 23 when the printed medium W is detected by the first conveying sensor S1. The control device 110 may cause the second drive circuit 116 to drive the conveying unit 2 when an image is printed on the printed medium W by the printing unit 1, instead of causing the second drive circuit 116 to drive the conveying motor 23 when the printed medium W is detected by the first conveying sensor S1.

### REFERENCE SIGNS LIST

1: printing unit
2: conveying unit
3: die set
4: front member feed unit
5: back member feed unit
6: pressing unit
7: take-out unit
8: collection box
9: button product container
30, 31: lower die
30a2: inner bottom surface
30b5: placement surface
33: upper die
40: front member stocker
43: front member slope
43a: notch
44: escape groove
45: pusher
66: pressing head
66e: first pressing portion
66f: second pressing portion
67: cutting unit
100: button product manufacturing device
110: control device
200: button product
201: pressed portion
202: lower die moving portion
203: suction device
205: cutter device
207: cutter
208: conveying unit
209: first conveying path
210: second conveying path
BE: back member
Dc1: conveying direction
Dc2: conveying direction
F: white film
L1: first straight line
L2: second straight line
Pw1: first position of connected portion
Pw2: second position of connected portion
SE: front member
W: printed medium
Wa: remaining portion
Wb: connected portion
Wc: coupling portion
Wc1: first coupling portion
Wc2: second coupling portion
Wc3: third coupling portion
Wd: linear weak portion
Wc1: edge portion on downstream side
Wf: cutting portion
α: acute angle formed by first straight line and second straight line

## Claims

1. A button product manufacturing device for manufacturing a button product by connecting a front member and a back member, the button product manufacturing device comprising:
a printing unit configured to perform printing on a printed medium;
a die set including:
a lower die configured to support the front member; and
an upper die configured to separate the front member from the lower die; and
a conveying unit configured to convey the printed medium above the front member, in a conveying direction from the printing unit toward the die set.

2. The button product manufacturing device according to claim 1, further comprising:
a control device,
wherein the control device is configured to perform:
a process of causing the conveying unit to convey the printed medium onto the front member supported by the lower die;
a process of causing the upper die to separate the front member and the printed medium from the lower die; and
a process of connecting, to the back member, the front member and the printed medium that are separated by the upper die.

3. The button product manufacturing device according to claim 2, further comprising:
a pressing unit configured to press the printed medium against the lower die,
wherein the printed medium includes:
a sheet-shaped connected portion connected to the front member and the back member;
a sheet-shaped remaining portion different from the connected portion; and
a coupling portion coupling the connected portion and the remaining portion, and
after the conveying process, the control device is configured to perform a cutting process of causing the pressing unit to press at least the connected portion of the printed medium against the lower die to cut at least a part of the coupling portion.

4. The button product manufacturing device according to claim 2, further comprising:
a pressed portion against which the printed medium is pressed; and
a lower die moving portion configured to move the lower die in a direction approaching the pressed portion and in a direction separating from the pressed portion,
wherein the printed medium includes:
a sheet-shaped connected portion connected to the front member and the back member;
a sheet-shaped remaining portion different from the connected portion; and
a coupling portion coupling the connected portion and the remaining portion, and
after the conveying process, the control device is configured to perform a pressing process of causing the lower die moving portion to move the lower die toward the pressed portion to cut the coupling portion by pressing the connected portion of the printed medium against the pressed portion.

5. The button product manufacturing device according to claim 2, further comprising:
a suction device disposed at a position different from a position of the lower die,
wherein the printed medium includes:
a sheet-shaped connected portion connected to the front member and the back member;
a sheet-shaped remaining portion different from the connected portion; and
a coupling portion coupling the connected portion and the remaining portion, and
after the conveying process, the control device performs a cutting process of causing the suction device to suck the connected portion of the printed medium to cut the coupling portion.

6. The button product manufacturing device according to claim 2, further comprising:
a cutter device configured to be moved in parallel to the printed medium placed on the front member,
wherein the printed medium includes:
a sheet-shaped connected portion connected to the front member and the back member;
a sheet-shaped remaining portion different from the connected portion; and
a coupling portion coupling the connected portion and the remaining portion, and
after the conveying process, the control device is configured to perform a cutting process of causing the cutter device to cut the coupling portion.

7. The button product manufacturing device according to claim 2,
wherein the printed medium includes:
a sheet-shaped connected portion connected to the front member and the back member;
a sheet-shaped remaining portion different from the connected portion; and
a coupling portion coupling the connected portion and the remaining portion,
the lower die includes a cutter on a surface facing the printed medium, and
after the conveying process, the control device is configured to perform a cutting process of moving the upper die to approach the lower die and pressing the upper die against the printed medium to cause the upper die and the cutter to cut the coupling portion.

8. The button product manufacturing device according to claim 2,
wherein the printed medium includes:
a sheet-shaped connected portion connected to the front member and the back member;
a sheet-shaped remaining portion different from the connected portion; and
a coupling portion coupling the connected portion and the remaining portion,
the conveying unit includes:
a first conveying path configured to convey the printed medium toward the lower die; and
a second conveying path different from the first conveying path and configured to convey the printed medium in a direction away from the lower die, and
the control device is configured to cause the conveying unit to convey the printed medium such that the connected portion and the remaining portion of the printed medium are conveyed via the first conveying path, and the remaining portion of the printed medium is conveyed via the second conveying path.

9. The button product manufacturing device according to claim 1,
wherein the front member has a circular shape in plan view, and the printed medium is formed in a circular shape in plan view.

10. The button product manufacturing device according to claim 3,
wherein the coupling portion forms a weak portion having lower strength than the connected portion and the remaining portion.

11. The button product manufacturing device according to claim 3,
wherein the coupling portion includes:
a first portion to be cut by the cutting process; and
a second portion not to be cut by the cutting process, and
after the cutting process, the control device is configured to perform a separation process of cutting the second portion of the coupling portion to separate the remaining portion from the connected portion.

12. The button product manufacturing device according to claim 11,
wherein the pressing unit includes a first pressing portion and a second pressing portion that are at least two pressing portions configured to press the connected portion of the printed medium against the lower die,
the control device is configured to:
in the cutting process, cause the first pressing portion to press a first position of the connected portion, and then causes the second pressing portion to press a second position of the connected portion; and
in the separation process, cause the conveying unit to convey the printed medium in an opposite direction to the conveying direction in a state where the connected portion is pressed by the first pressing portion and the second pressing portion.

13. The button product manufacturing device according to claim 3,
wherein the pressing unit includes a pressing head configured to be pressed against the printed medium,
the lower die includes:
an inner bottom surface configured to support the front member; and
a placement surface on which the printed medium is placed, the placement surface surrounding the periphery of the inner bottom surface and being located above the inner bottom surface, and
in the cutting process, the control device is configured to press the pressing head to a lower position closer to the inner bottom surface than to the placement surface.

14. The button product manufacturing device according to claim 12, further comprising:
a collection container configured to collect the remaining portion,
wherein after the separation process, the control device is configured to cause the conveying unit to convey the printed medium in the opposite direction to convey the remaining portion to the collection container.

15. The button product manufacturing device according to claim 12,
wherein the printed medium includes, at a boundary between the connected portion and the remaining portion, a plurality of the coupling portions and a cutting portion between the coupling portions adjacent to each other,
the coupling portions include:
first coupling portions coupling the first position and the remaining portion;
second coupling portions coupling the second position and the remaining portion; and
third coupling portions coupling the remaining portion and a third position in the connected portion excluding the first position and the second position, and
a total number of the first coupling portions and the second coupling portions is smaller than the number of the third coupling portions.

16. The button product manufacturing device according to claim 12,
wherein the printed medium has a rectangular shape,
the remaining portion is disposed to surround the connected portion, and
the printed medium includes:
a downstream side edge portion located in a downstream side of the printed medium in the conveying direction, and
a linear weak portion extending from the downstream side edge portion to the connected portion and having lower strength than the connected portion and the remaining portion.

17. The button product manufacturing device according to claim 16,
wherein the pressing unit includes a cutting unit located on a downstream side in an opposite direction to the conveying direction with respect to a downstream end of the linear weak portion in the opposite direction to the conveying direction in a case where the first pressing portion is pressed against the first position of the printed medium and the second pressing portion is pressed against the second position of the printed medium.

18. The button product manufacturing device according to claim 1, further comprising:
a front member feed unit configured to feed the front member to the lower die.

19. The button product manufacturing device according to claim 18,
wherein the front member feed unit includes:
a front member stocker configured to accommodate the front member;
a pusher configured to push out the front member toward the lower die; and
a front member slope configured to guide the front member pushed out by the pusher toward the lower die.

20. The button product manufacturing device according to claim 19,
wherein the lower die has a circular shape in plan view, the front member stocker has a cylindrical shape, and
when a straight line intersecting the conveying direction is defined as a first straight line and a straight line connecting a center of the lower die and a center of the front member stocker in plan view is defined as a second straight line, an acute angle formed by the first straight line and the second straight line is more than 0 degrees and 30 degrees or less.

21. The button product manufacturing device according to claim 19,
wherein the front member slope has a notch at a downstream end of the front member in a push-out direction.

22. The button product manufacturing device according to claim 21,
wherein the notch has an arc shape.

23. The button product manufacturing device according to claim 2,
wherein the control device is configured to perform a film conveying process of causing the conveying unit to convey a white film such that the white film is placed on the front member prior to the printed medium.

24. The button product manufacturing device according to claim 23,
wherein after the cutting process, the printed medium has the same size as the white film or is larger than the white film.

25. A button product manufacturing method for manufacturing a button product by connecting a front member and a back member, the button product manufacturing method comprising:
supporting the front member by a lower die;
performing printing on a printed medium by a printing unit;
conveying, by a conveying unit, the printed medium in a conveying direction above the front member supported by the lower die;
separating the front member and the printed medium from the lower die by an upper die; and
connecting, to the back member, the front member and the printed medium that are separated by the upper die.

26. A button product manufacturing program executed by a computer in a button product manufacturing device configured to manufacture a button product by connecting a front member and a back member, the button product manufacturing program being configured to cause the computer to function as:
a feed control unit configured to feed the front member and cause a lower die to support the front member;
a print control unit configured to cause a printing unit to perform printing on a printed medium;
a conveying control unit configured to cause a conveying unit to convey the printed medium in a conveying direction above the front member supported by the lower die;
an upper die control unit configured to cause an upper die to separate the front member and the printed medium from the lower die; and
a connection control unit configured to connect, to the back member, the front member and the printed medium that are separated by the upper die.
